# EUROPEAN PATENT SPECIFICATION

(11) **EP 3 037 237 B1**
(45) Date of publication and mention of the grant of the patent: **05.02.2020**
(21) Application number: 15200862.9
(22) Date of filing: 17.12.2015
(51) Int. Cl.: B29C 44/58, B29C 33/34, B29C 35/02, B29C 44/12, B29K 75/00

(54) **METHOD AND APPARATUS FOR FOAMING OBJECTS**
VERFAHREN UND VORRICHTUNG ZUM AUFSCHÄUMEN VON OBJEKTEN
PROCÉDÉ ET APPAREIL DE MOUSSAGE D'OBJETS

(30) Priority: 19.12.2014 IT MI20142196
(43) Date of publication of application: 29.06.2016
(73) Proprietor: Cannon S.p.A., 20121 Milan (IT)
(72) Inventor: Volpato, Marco, 20121 Milan (IT); De Rossi, Claudio, 20121 Milan (IT); Corti, Maurizio, 20121 Milan (IT)
(74) Representative: Candito, Rocco

(56) References cited:
- WO-A1-2011/076756
- JP-A- 2009 099 692
- US-A- 3 685 944
- US-A- 4 122 888
- US-A- 4 751 029
- US-A1- 2013 009 332
- US-B1- 6 582 635

## Description

### BACKGROUND OF THE INVENTION

The present invention relates to a method and an apparatus for foaming objects, such as doors for a refrigerator, walls for a display bench, parts of walls or insulating coatings for a building or the like, and, in general, panels or objects, mostly substantially two-dimensional, i.e. having two dimensions prevailing on a third dimension, and provided with external coating elements, such as half shells or shaped panels made of plastics or metal, or flat, curved or fretted slabs or metal sheets, between which coating elements a thermally insulating intermediate polyurethane or phenol layer has to be interposed.

### STATE OF THE ART

It is known that the production of doors for domestic, commercial and industrial refrigerators is today possible with two different basic technologies with regard to the conveying and maintaining of the doors in respective moulds during the production cycle.

A first basic technology provides for a foaming process in a closed mould and is based on conveying the doors by a plant that has a rotatable drum carousel.

On the drum carousel, which is rotatable around a horizontal rotation axis, mould-holding presses are housed, generally ranging in number from three to twelve, each of which comprises two flat containing and pressing surfaces stiffened by a own structure that is rather sturdy so as not to be deformed under the force of the pressure of the expanding foam at the surfaces of which the respective lower and upper half moulds are connected that contain the respective half shells or shaped panels that are intended for defining the external face and the internal face of the door with respect to the refrigerator cell on which the door has to be mounted. A mould-holder press is provided for each pair of coupled half moulds. The mould-holding presses are then mounted on the drum carousel, and are rotated together with the drum carousel.

Once the half shells have been loaded onto the respective half moulds, the latter are reciprocally closed and kept clamped by the aforesaid presses. A mixing head is then brought near and inserted via a hole obtained on the side, this mixing head injects - inside the cavity defined by the half shells through a side hole made in the mould - the polyurethane mixture intended to constitute the intermediate layer of insulating material of the door.

It is necessary to contain firmly with force in the correct position the doors whilst the foam, expanding, fills the respective cavities bounded by the half shells of the doors as this foam exerts a high pressure that can reach 6 ÷ 8 Newton per square centimetre.

After injection of the polyurethane mixture and expansion thereof, the foam is polymerised whilst the drum carousel rotates by successive steps. In order to remove a foamed door and subsequently load a new door to be foamed, the operator requires about 20÷30 seconds, and considering also the foaming, closing and advancement of a step, a total of 40 to 60 seconds is required whereas for polymerisation there are required 3 to 4 minutes for each door being processed.

This plant, above all because of the multiplicity of presses and corresponding driving devices arranged on the drum carousel, is very complex from the structural and functional point of view and enables foaming operations to be performed only in a time sequence that is subsequent to the removal of the foamed door and to the insertion of the two half shells, thus requiring time for such operating steps.

Further, the structural complexity entails, from the dynamic point of view, significant inertial masses that impose functional and productive limits on the entire plant.

A second technology for the production of doors for refrigerators and the like provides an open mould foaming process, i.e. a process in which the two half moulds are kept initially separated during pouring of the polyurethane mixture and are subsequently mutually coupled and closed on one another before expansion of the foam. In this context, a plant is known that is equipped with a double-chain conveyor device, the so-called "paternoster".

The double-chain conveyor device is configured for supporting and dragging a plurality of mould holders connected to a chain, the number of which varies for example from 8 to 40 mould holders, in which each mould holder can contain a pair of half moulds for foaming just one door or a single set of doors for a single refrigerator.

It is necessary for the mould holders to be maintained on horizontal planes. This occurs by suitable coupling of the chain elements with the respective drive pinions. It order to perform the various steps of extraction of the foamed door, insertion of the new half shells to be foamed etc., at least two operators are normally necessary, but in certain cases even five are required.

In order to meet standard requirements set by refrigerator manufacturers, it is necessary that no geometrical distortions occur on the shells of the doors beyond a certain acceptability threshold and in order to do so, in the case of the double-chain plant, resort is made to moulds and mould holders that are rather sturdy, that are made of metal of considerable thicknesses in order to be able to autonomously contrast the thrusts that are generated in several directions in each door during the foaming step or, in the case of the drum plant, resort is made to sturdy presses, which are also heavy and structurally complex. This is naturally all reflected in great weight and inertia, which inevitably affect also the speeds and thus productivity of such plants.

GB2120970 discloses a method of manufacturing rigid frame building elements filled with hard foam plastics.

US2013/009332 discloses a method for producing a sheet moulding compound in a production process.

WO2011/076756A **discloses a method and device for producing molded parts made of plastic, in particular of a fiber composite material.**

### OBJECTS OF THE INVENTION

One object of the invention is to simplify both structurally and functionally plants for foaming doors, in particular refrigerator doors, or more in general substantially two-dimensional objects improving the versatility and productivity of such plants.

As today, in the current manufacture of refrigerators, there is a tendency to diversify the various models, by varying in particular the aesthetic appearance thereof, the dimensions and the combination between lower and upper doors, modifying specifically the geometrical shape, of the respective doors, there is a continuous increase of the various geometrical configurations of containing moulds dedicated to the manufacture of the different geometrical shapes of door. A further need is to produce the different shapes according to the "just in time" method, i.e. to make available the combination of doors for the specific refrigerator model that is on the production line together with many other models in order to meet the sequence of orders placed by the market. This is required to avoid backlogs of stocks of individual models in the warehouse. Thus another object of the invention is to provide a solution that enables the ever greater number of geometrical shapes of doors on the same production line that are different from one another to be managed in a flexible and optimised manner, obtaining high plant productivity with maximum reduction of undesired downtime to enable the door model to be changed during the sequential production of doors.

A further object is to provide a plant with a modular structure that can be extended if necessary by inserting an additional desired number of modules that is able to adapt with great flexibility to the available spaces, that is able to limit the maximum general overall dimensions whilst ensuring at the same time great productive capacity and is able to facilitate accessibility for a robot or an operator for loading and/or unloading operations.

### SHORT DESCRIPTION OF THE INVENTION

These and other objects and advantages of the invention are achievable by a method according to what has been defined in claim 1 and by an apparatus according to what has been defined in claim 14.

The method and the apparatus according to the invention enable the aforementioned objects to be achieved.

In particular, the principle on which the method and the apparatus according to the invention are based is to ensure firm closing and clamping of the half moulds that are in reciprocal contact, without the use of bolts or other inconvenient clamping elements which are normally coupled, in which the half moulds are coupled with a superstructure or reinforced structure of the mould to limit the deformations thereof arising from the expansion pressure of the foam. The condition of firm closing and clamping is obtained by applying opposite pressure actions that are applicable by pressing revolving means, in particular series of presser rollers that come into contact on opposite sides on each moulding unit constituted by the half moulds with possible reinforcing superstructures. In this manner, the half moulds can have a simpler and lighter structure (and thus be cheaper and quicker to open/close/handle) as the contrasting function of the thrusts of the expanding foam is performed fully by the presser rollers. In the following description, for the sake of simplicity, reference will be made to the term "half mould" to indicate one of the two couplable parts that house the respective opposite half shells; it should be noted that "half mould" can be understood to be only the actual mould element having an opposite internal cavity for housing a respective half shell, or, in the embodiments as disclosed, it can be understood to be the set defined by this mould element connected to a respective reinforcing superstructure or platform or reinforcing pallet. The two half moulds, i.e. the two actual mould elements, together with the two respective reinforcing structures, make up an entire moulding unit, or foaming unit.

Further characteristics and advantages will emerge from the appended claims, from the figures and from the following description.

### SHORT DESCRIPTION OF THE DRAWINGS

The invention can be better understood and implemented with reference to the attached drawings that illustrate an embodiment thereof by way of non-limiting example, in which:
Figure 1 shows an apparatus according to the invention for foaming objects, such as doors for refrigerators, partially enclosed in a kiln for heating moulding units;
Figure 2 is a section, taken along a vertical longitudinal plane, of the apparatus of Figure 1, in which the internal parts of the apparatus are more visible; in particular a plurality of operative modules is visible that are placed in a sequence that make up the apparatus according to the invention;
Figure 3 is a top view of the apparatus in which the upper horizontal enclosing wall is missing in order to make the inner parts of the apparatus visible;
Figures 3A and 4 to 8 show in greater detail various portions of the apparatus, taken in sequence from left to right, i.e. the various modules that make up the apparatus shown in figure 2, in particular:

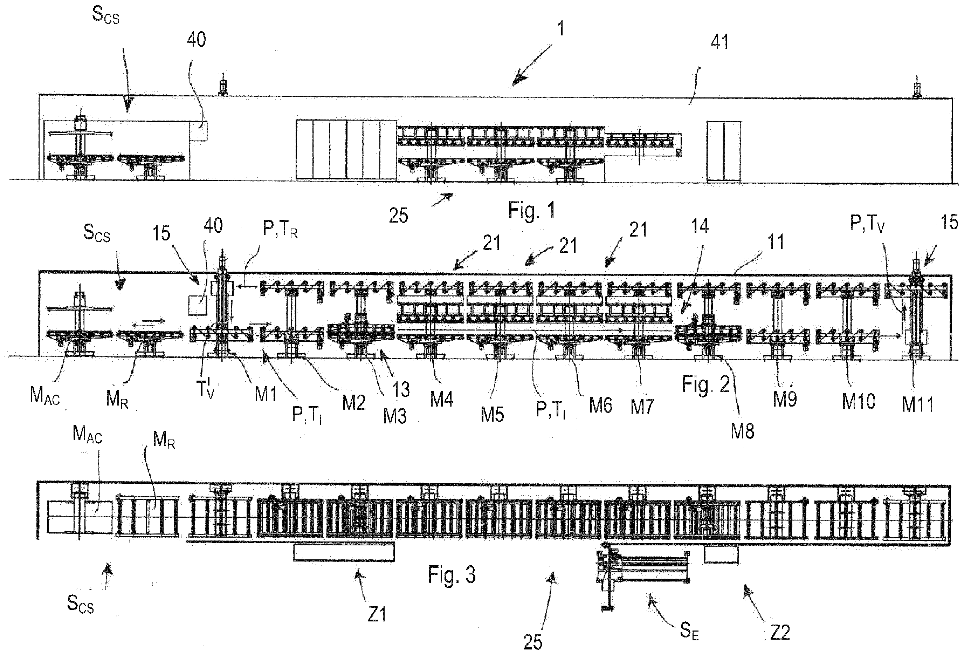

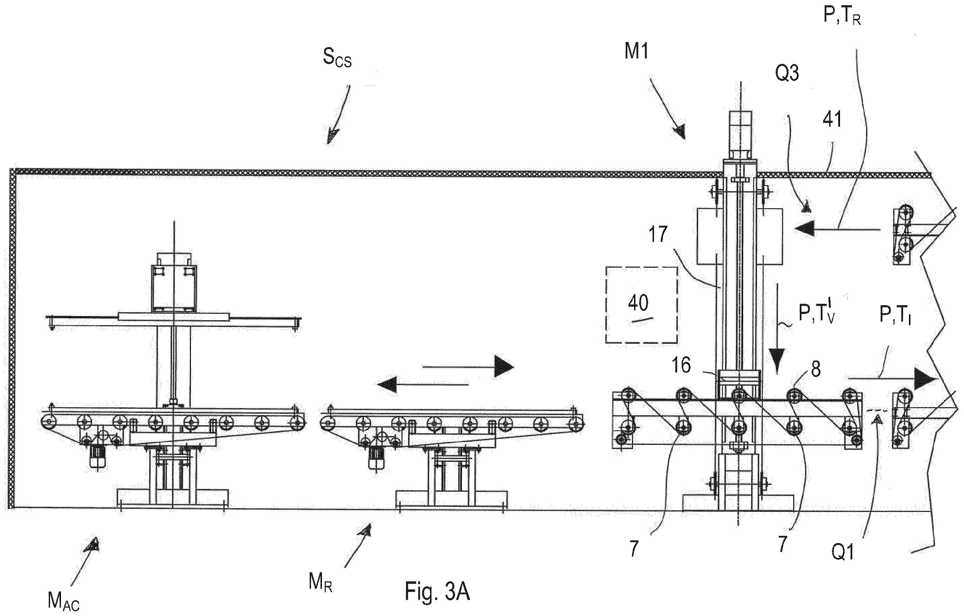

Figure 3A shows a part of the apparatus, in particular a station that enables moulding units to be replaced or changed;

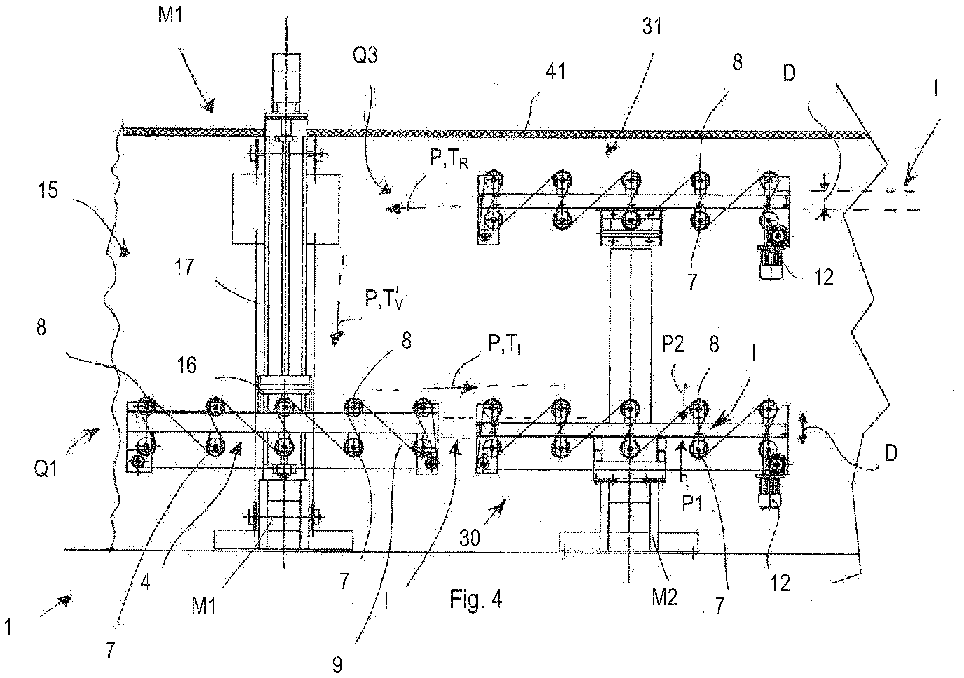

in Figure 4, on the left, a first operative module is visible, provided with both a vertical and horizontal transferring device, and to the right a second operative module, provided with an upper array and with a lower array of presser rollers, for clamping and conveying moulding units;

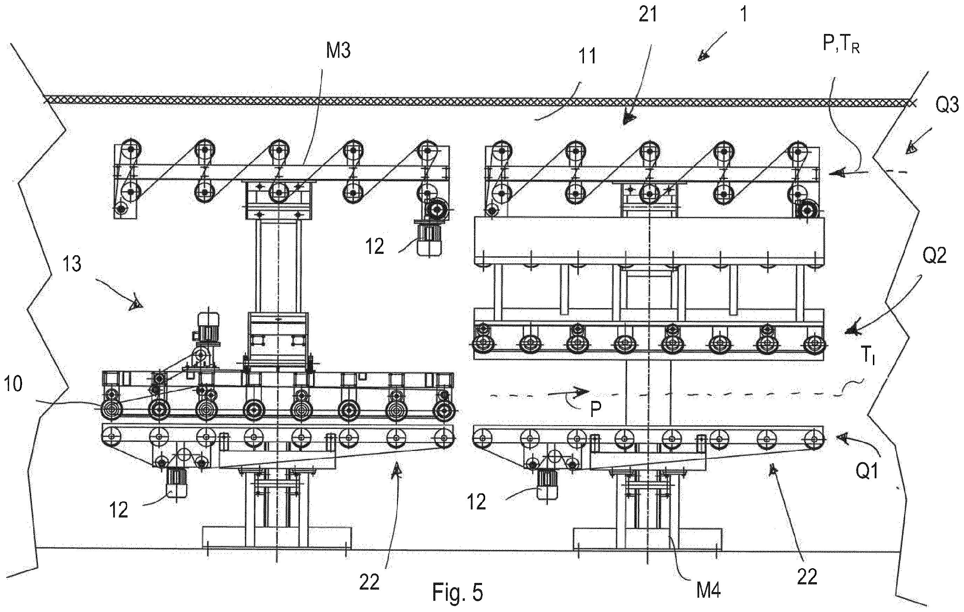

Figure 5 shows a third operative module provided with a mould grasping/opening unit, that defines an opening station and a fourth operative module provided with a retaining and conveying operative module for the moulding units;

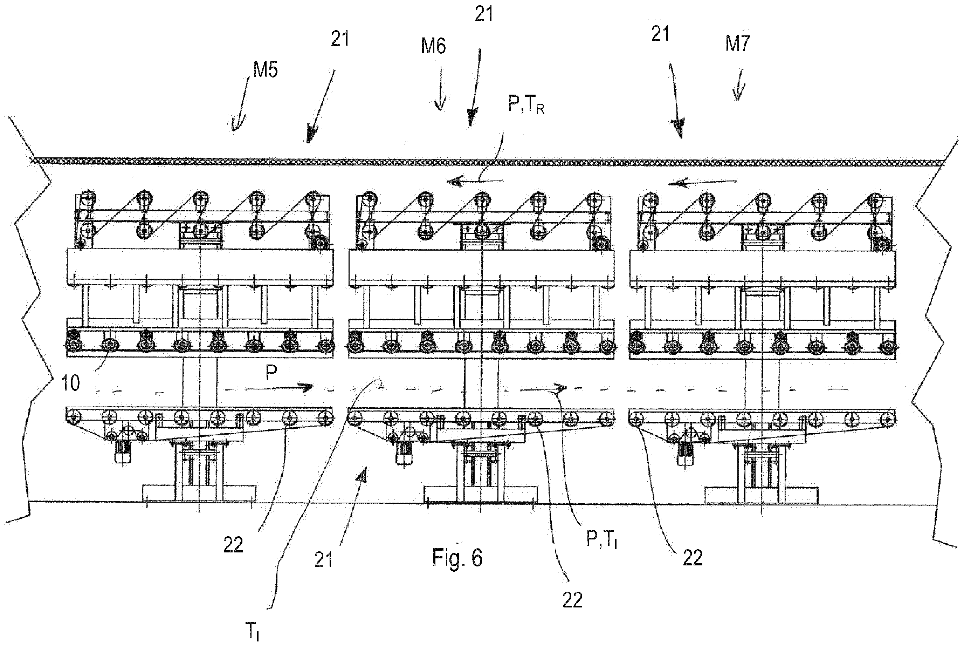

Figure 6 shows three further operative modules that are mutually adjacent and are each provided with a retaining and conveying unit;

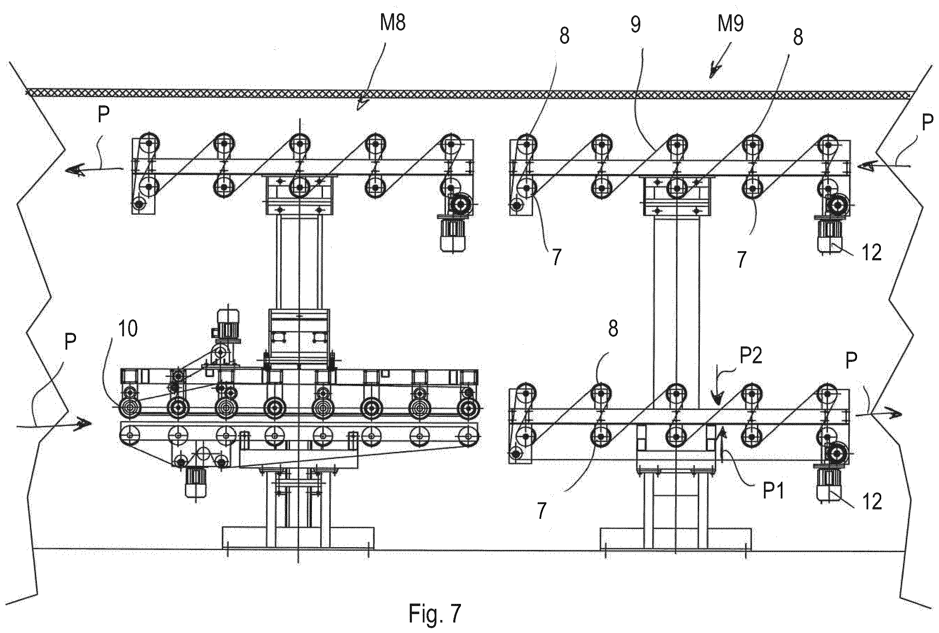

Figure 7 shows an eighth operative module provided with a closing unit for the moulds, and a ninth operative module provided with upper and lower arrays of presser rollers, for clamping and conveying moulding units;

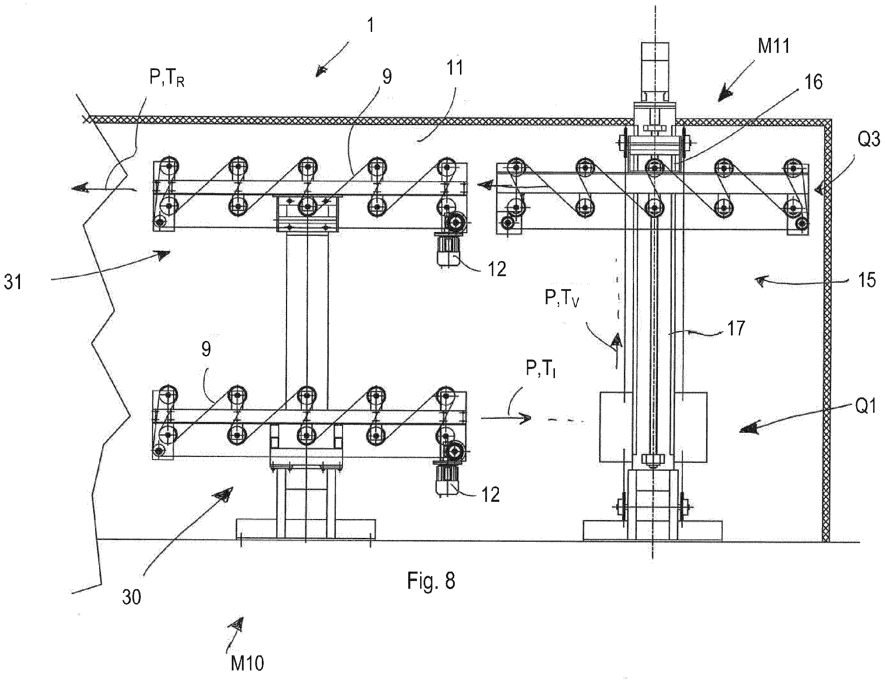

Figure 8 shows a tenth operative module, which is similar to the ninth operative module, and an eleventh operative module, provided with a further unit for both horizontal and vertical transferring of the moulding units;

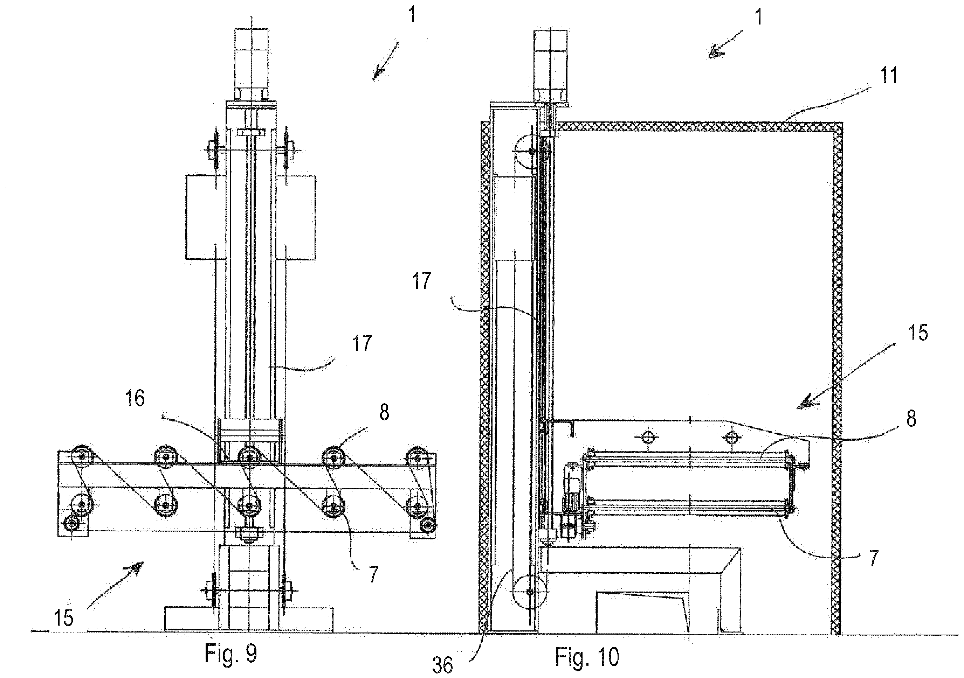

Figures 9 and 10 are two different lateral and frontal views of an operative module provided with horizontal/vertical transfer units of the moulding units;

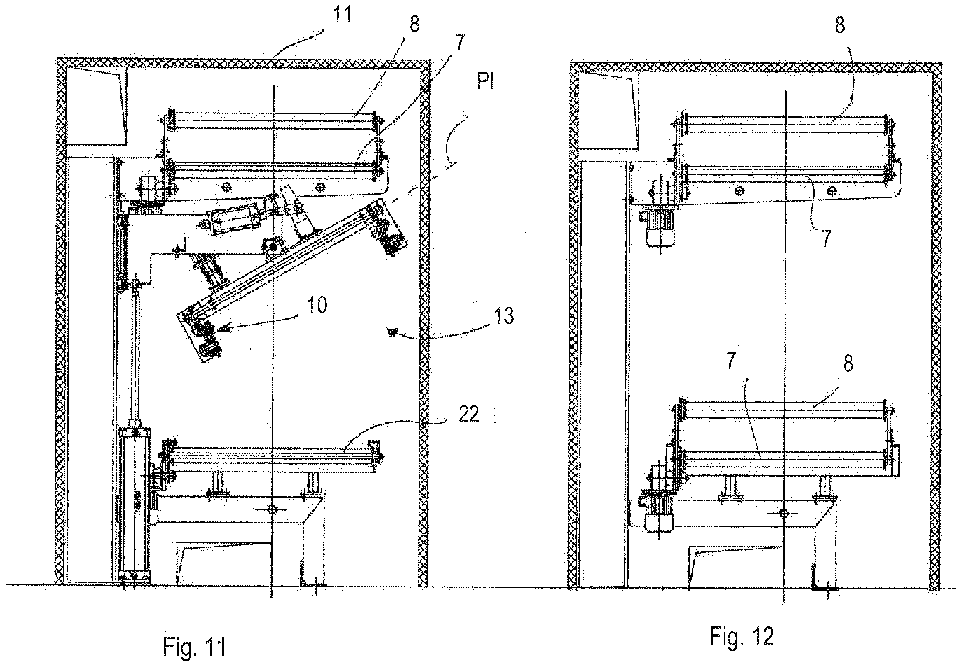

Figure 11 shows, in a frontal view, an operative module having the grasping/opening unit in an open position;
Figure 12 shows, in a frontal view, an operative module provided with upper and lower arrays of presser rollers;

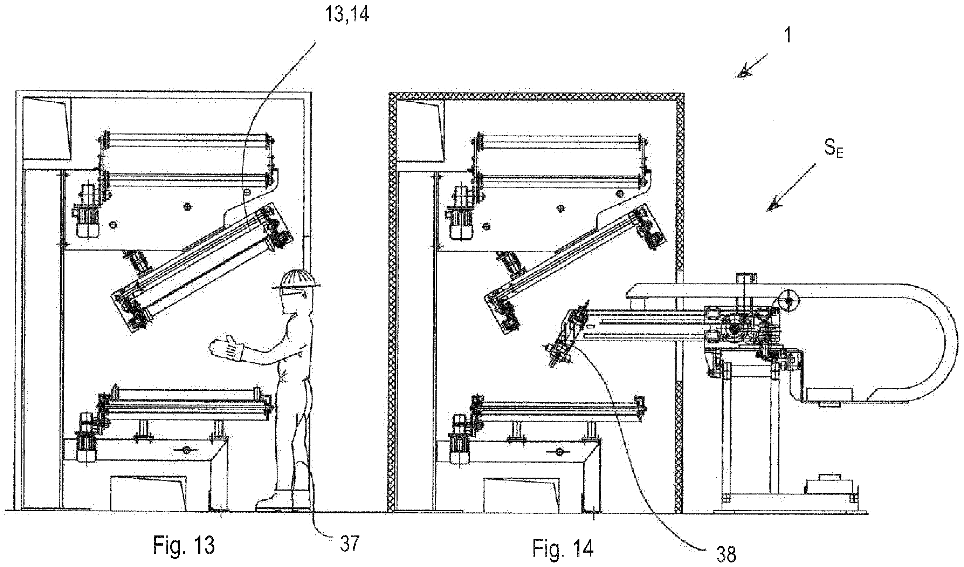

Figures 13 and 14 show an operative module with opening unit in raised position to permit access respectively to an operator and to a robot;

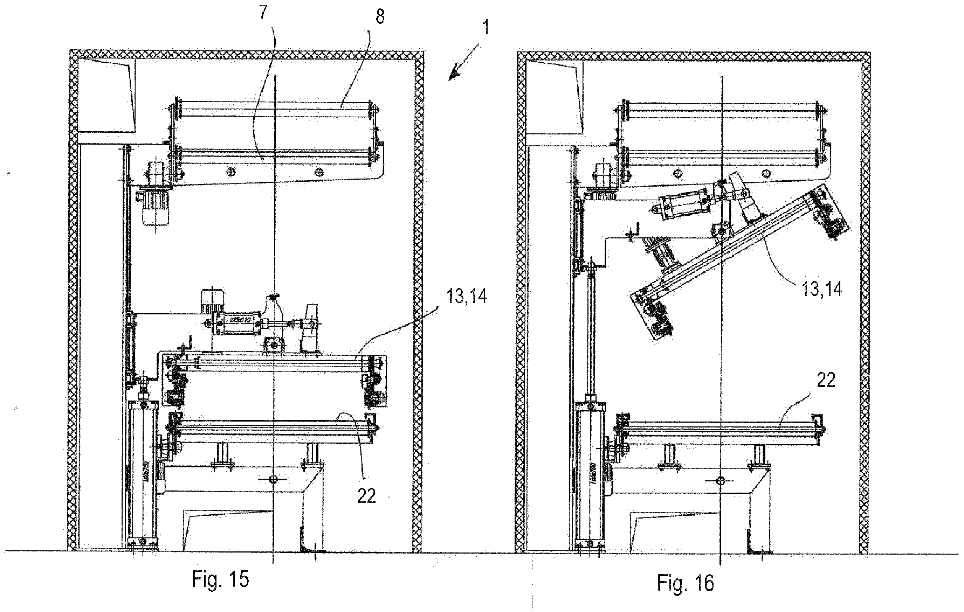

Figures 15 and 16 show an operative module provided with opening/closing units respectively in a lowered closed position, and in a raised and rotated open position;

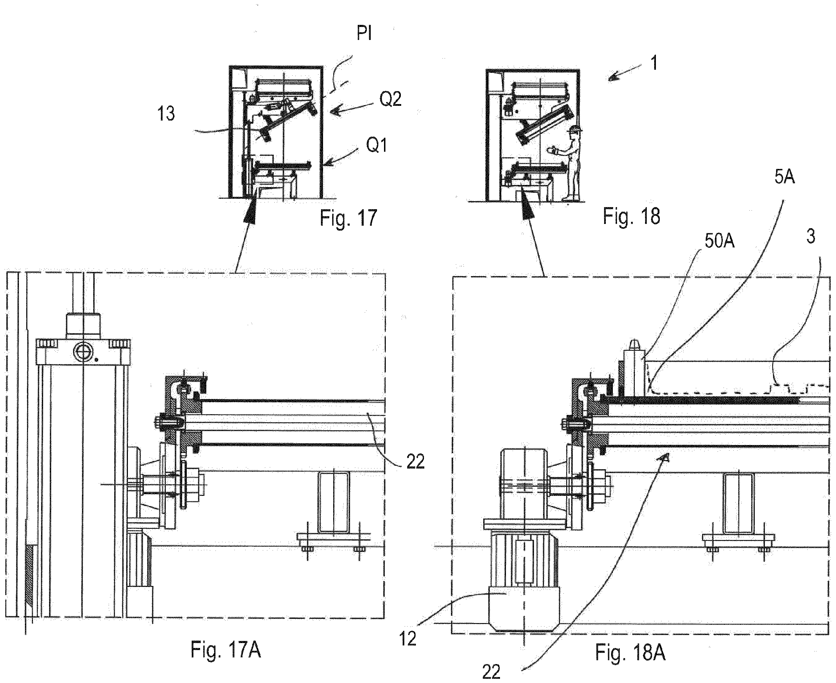

In Figure 17 the opening station is visible with the opening unit in the open configuration in which half moulds are not present;
Figure 18 is a section view of an operative module in a step in which an operator loads the shells of the doors to be foamed (or unloads the foamed doors);
Figures 17A and 18A are enlarged details of a lower portion respectively of figures 17 and 18;

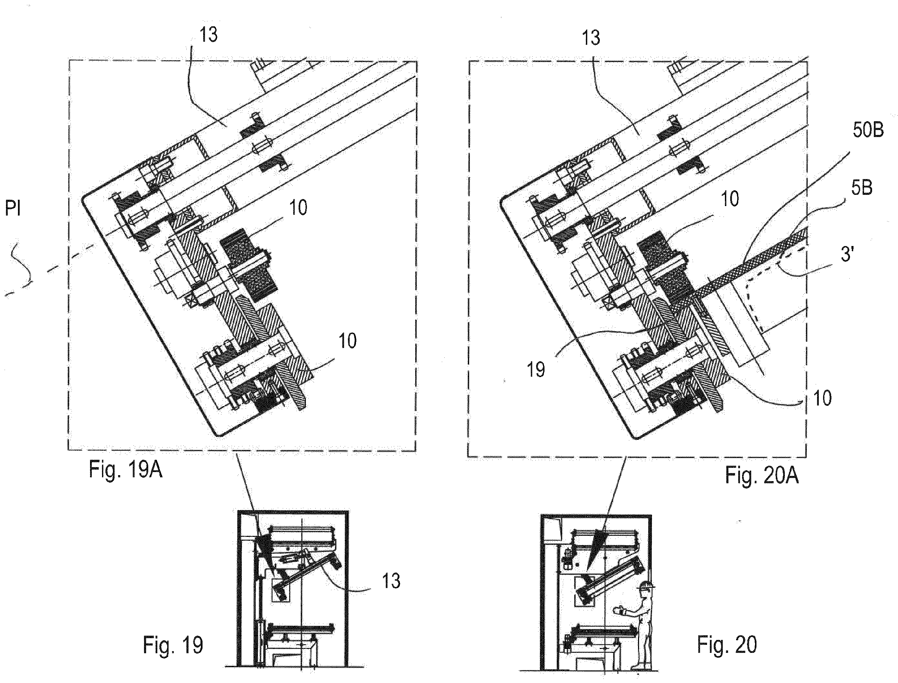

Figures 19 and 20 are identical respectively to figures 17 and 18, whereas figures 19A and 20A are enlarged details of an upper portion respectively of figures 19 and 20 and show details of the conveying and retaining system of the upper half moulds

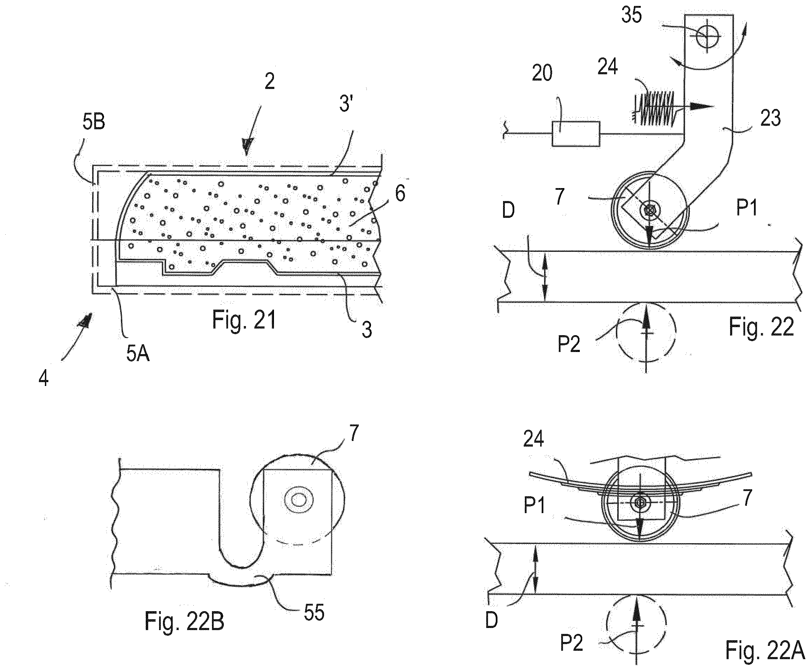

Figure 21 is a schematic and fragmentary section view of a refrigerator door obtainable by the method and the apparatus according to the invention, in which two coating elements or half shells are visible, between which a thermoinsulating layer made of polyurethane or phenol material is interposed;
Figure 22 shows schematically a presser roller of the apparatus, coupled with elastic preloading means, arranged for pressing the roller with a desired force against a moulding unit, and sensor means for detecting the pressure exerted by the roller so as to enable optimum adjustment and control thereof;
Figures 22A and 22B show schematically two configurations in which elastic elements are provided, for example of the leaf spring type, or a "U"-shaped elastic portion, coupled with, and acting on, the presser roller shaft shown in figure 22;

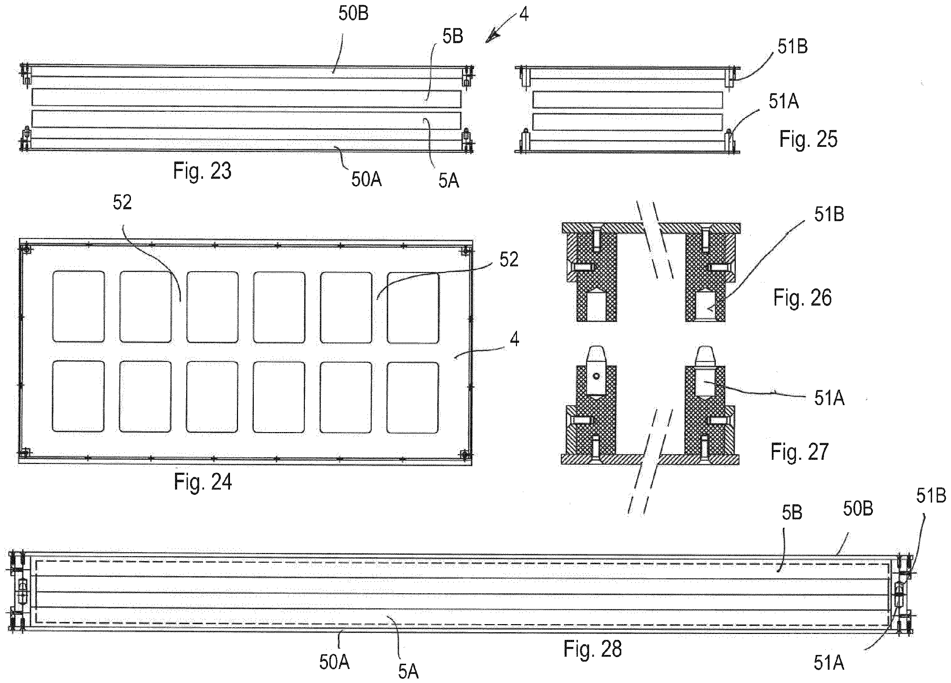

Figure 23 shows schematically a moulding unit (that includes both the two mould elements and the respective pallets or upper and lower reinforcing superstructures;
Figures 24 and 25 show, according to respectively top and side views, the moulding unit, provided with reinforcing superstructures, that is shown in Figure 23;
Figures 26 and 27 are enlarged details of centring and coupling means provided on the superstructures of the moulding unit;
Figure 28 shows a moulding unit (with reinforcing superstructures) in a closed configuration.

### DETAILED DESCRIPTION OF THE INVENTION

With reference to the attached figures, an apparatus 1 is shown for foaming objects 2 that generally have two dimensions prevailing on a third dimension and are provided with two external coating elements 3, 3' that are coupled together, with an interposed intermediate layer 6 of polyurethane or phenol insulating material. In particular, in the following description reference will be made, by way of non-limiting example, to the foaming of doors for domestic or industrial refrigerators.

Although the following description refers to the foaming, i.e. the application of insulating polymeric foams in doors 2 for refrigerators, the apparatus 1 can also be used for foaming lid doors of chest freezers, insulating panels for display benches, doors and windows for houses and buildings, and more in general any mostly two-dimensional objects, i.e. objects having two dimensions that are much larger than a third dimension.

The coating elements 3, 3' to which reference will be made can be of the shell or shaped panel type or of the sheet metal, or flat, curved or thermoformed slab type. In particular, the doors 2 for refrigerators can have an external half shell 3' made of sheet metal, intended for defining the external face during normal use of the door, and an internal half shell 3 made of thermoformed thermoplastic material, intended for defining the internal face of the door with respect to the cell of the refrigerator associated therewith.

The two half shells are coupled to form a box that is hollow and possibly provided at the perimeter with a washer; foaming occurs between the two half shells to generate the intermediate layer 6 of thermally insulating polyurethane or phenol material.

The two half shells are housed in respective half moulds 5A, 5B that together define a respective closed moulding unit 4. The moulding unit 4, in particular but not in a limiting manner, includes reinforcing superstructures 50A, 50B that are reciprocally couplable to contain deformation arising from the expansion pressure of the foam, as explained better below. The two reinforcing structures or platforms 50A, 50B, or pallets enable the respective pair of half moulds 5A, 5B to be moved/transferred.

The apparatus 1 comprises a plurality of operative modules M, M1, ..., M11,.., Mn provided with pressing revolving or rolling means for clamping and conveying each moulding unit 4 that comprises two respective coupled half moulds 5A, 5B.

The pressing revolving means comprise in particular a series of presser rollers 7, 8, mounted on appropriate supports so as to define flat roller cages that come into contact from opposite sides on each moulding unit 4 applying thereupon, from opposite sides, opposite pressure actions PI, P2 that ensure effective mutual closing and clamping of the half moulds 5A and 5B, contrasting the thrusts exerted by the expanding foam.

The operative modules M, M1, ..., M11, Mn are mutually distinct and separate, drivable independently of one another, and synchronisable with one another. These operative modules can be combined with one another in a desired manner according to specific process or installation needs as they arise, thus defining a highly flexible and versatile modular structure. In other words, a desired number of operative modules M, M1, ..., M11, Mn can be chosen which are reciprocally combinable according to a desired spatial sequence, so as to make up a modular structure of desired length and shape that defines a suitable and optimised advancement path P according to the type of foam objects, the features of the reactive mixture used, and the shape and size of the installation spaces available.

In the embodiment provided by way of example that is disclosed and shown in the attached figures, the apparatus 1 comprises eleven operative modules from M1 to M11, placed one after the other according to a linear arrangement so as to define a closed loop path P that comprises a lower horizontal portion T_{I}, a vertical ascending portion T_{V}, and upper horizontal return portion T_{R}, and a vertical descending portion T_{V}'. A mould-changing station S_{CS} is also provided that is disclosed better below that is located near the first operative module M1, and is used to replace one or more moulding units (i.e. a mould or a plurality of single moulds or a pair or several pairs of pallets or upper and lower reinforcing superstructures that include respective moulds) with other different moulds, so as to be able to foam doors with variable geometries without having to stop the productive cycle. The mould-changing station S_{CS} comprises an opening/closing module M_{AC} for moulds, and an auxiliary module M_{R} that comprises an intermediate roller support, positioned between the module M_{AC} and the module M1. In other words, the apparatus 1 can be provided with a further conveying and opening/closing station for the mould change. To this further intermediate auxiliary conveying station M_{R}, by further independent conveying or lifting and transport system, for example with the help of forklift trucks or equivalent means, pallets can be taken that contain moulds to be replaced with those in use. Whereas in the further opening/closing station only the moulds inside the pallets or reinforcing superstructures can be replaced. In other words, an entire moulding unit can be replaced (i.e. both the moulds and the respective reinforcing superstructures) or it is possible to proceed by leaving on the apparatus the reinforcing superstructures currently in use but replacing only one or more moulds included in, or associated with, the reinforcing superstructures.

Another embodiment is not ruled out in which the aforesaid mould-changing station is placed near the module M11 acting as a lifting station, rather than near the module M1, or even a configuration that is a combination of the aforesaid two embodiments. The operation of the mould-changing station Scs is disclosed below.

Along the lower horizontal portion TI, between an opening/unloading zone Z1 and a loading/closing zone Z2, occupied by modules M3 to M8, the various opening, unloading, and closing operations of the moulding units 4 are performed that are disclosed better below.

In particular, the operative modules M1 and M11, in addition to the function of clamping the moulding units 4, also have the function of transferring the moulding units 4 from a portion of path placed at a height, to another portion of path located at a different height. In particular, the operative modules M11 and M1 are provided with transferring devices 15 arranged for respectively raising each moulding unit 4 to an upper return portion T_{R} of the advancement path P, and for lowering each moulding unit 4 from the upper path return portion T_{R} to a lower path portion T_{I} along which the moulding units 4 are unloaded, loaded and closed. Specifically, each transferring device 15 comprises a slide unit 16, supporting a series of presser rollers 7 and 8, which is drivable slidably vertically along an upright 17 or the respective operative module M1 or M11, by a belt or chain driving mechanism 36 or other equivalent means (Figure 10).

The apparatus 1 comprises a casing 41 that encloses the various operative modules M and bounds a heating chamber 11 into which hot air is introduced to promote the foaming process. In the lower part of the casing 41 an open access portion 25 is provided for the operators 37 and/or robots.

The operative modules M3 to M8, in addition to performing, in the upper portion thereof, the function of clamping and conveying the closed moulding units 4 along the path return portion P, are also used for the steps of opening and unloading the moulded objects, loading new half shells, dispensing polyurethane/phenol mixture and closing the moulding units 4.

A further three operative modules M2, M9, M10 are provided but which could be more than or less than three, depending on need, which guarantee clamping and conveying each moulding unit 4 both along the lower path portion T_{I} and along the return path portion T_{R} placed above. In particular, the operative modules M2, M9, M10 are provided with a first series 7 and second series 8 of presser rollers placed in a lower zone 30 along the lower portion T_{I} of the advancement path P, and with a further first series 7 and second series 8 of presser rollers, located in an upper zone 31, along the upper return portion T_{R} of the advancement path P.

As already emphasised, a different number of operative modules M and a different form of spatial distribution can be adopted.

As will be clearer from the following description, one particularity of the method and of the apparatus 1 according to the invention is that of ensuring firm closing and clamping of the half moulds 5A, 5B in reciprocal contact without having to use bolts, locks or similar devices, but connecting the half moulds to respective superstructures or reinforcing structures 50A, 50B that are reciprocally couplable to limit deformation arising from the expansion pressure of the foam. This is possible by applying opposite pressure actions that are applied by the aforesaid pressing revolving or rolling means, in particular by the series of presser rollers 7, 8, provided in the operative modules M, that come into contact from opposite sides on each moulding unit 4.

The reinforcing superstructures 50A, 50B include centring and coupling elements 51A, 51B (male and female elements). The centring and coupling elements 51A, 51B, for example of the tapered pin type (male element) that engages a respective hollow (female element) ensure correct positioning and reciprocal coupling of the reinforcing superstructures 50A, 50B.

On the external surfaces of the reinforcing superstructures 50A, 50B preferential wear tracks 52 can be obtained that are intended to come into contact with corresponding rings of the presser rollers 7, 8 from which they receive the clamping pressure. Owing to this configuration, structurally lighter half moulds can be provided, for example made of aluminium, or of resin reinforced with fibres or microspheres, to be associated with the aforesaid respective reinforcing superstructures 50A, 50B that on the other hand performs the task of successfully supporting the pressure loads applied by the presser rollers.

The series of first presser rollers 7 and second presser rollers 8 apply to each moulding unit 4, on opposite sides, the opposite pressure actions PI, P2 so as to maintain reciprocally closed and clamped the respective first 5A and second 5B half moulds, contrasting the thrusts exerted by the expanding foam.

Owing to this configuration, the half moulds 5A, 5B can have a simpler and lighter structure, as the function of contrasting the thrusts of the expanding foam is performed completely by the presser rollers 7, 8.

Further, the operation of removing moulded doors 2, or loading new half shells and of subsequent foaming is substantially accelerated, as such operations occur at different stations, each dedicated to one of these operations.

Each operative module M is provided with driving motor means 12 by means of which the respective series of presser rollers 7 and 8, independently of the other operative modules, can be driven for clamping and conveying moulding units 4 along the advancement path P.

A control unit 40 is provided operationally connected to all the operative modules M, M1, ...., M11,...,Mn, and is able to drive the operative modules independently of one another to move in an indexed manner or continuously the moulding units 4 and half moulds 5A, 5B, at an advancement speed that is different from zone to zone of the advancement path P according to the time required for the loading/unloading operations and the time required to complete the foaming reaction and shape stabilisation of the foamed doors 2.

The moulding units 4 used to contain and foam the objects 2 each comprise a pair of half moulds, in particular a first half mould 5A and a second half mould 5B suitable for receiving respective coating elements 3, 3' of the objects 2 to be foamed. In particular, each moulding unit 4 can be configured to contain and mould just one door, or also a set of doors to be associated with a refrigerator.

Each moulding unit 4 can for example contain a door of greater dimensions, intended to close a greater cell of the refrigerator, for example the food storage compartment, and another smaller door or two other doors to be associated with respective further cells of this refrigerator (e.g. freezer compartment, etc). In general, each moulding unit 4 can thus contain one or more pairs of coating elements 3, 3' or half shells to be foamed for obtaining corresponding one or more doors.

In the present description, by way of non-limiting example, it is shown that the lower half moulds 5A are intended to contain the inner coating elements 3 of the doors, whereas the upper half moulds 5B receive the outer coating elements 3' of the doors. The presence of magnets buried in the upper half moulds 5B enables the latter, in the raised open position, to retain the outer half shells 3' made of sheet metal. If it is desired to reverse the positions of the half shells, or also if the outer half shells 3' are for example made of plastics, other suitable releasable retaining means can be provided on the upper half moulds 5B instead of retaining magnets.

In each operative module, the first rolling means and the second rolling means, which in particular comprises respectively a first series (or group) of presser rollers 7 and a second series (or group) of presser rollers 8, are positionable at a reciprocal desired operating distance D so as to define, along the advancement path P, a gap I for the advancement and clamping of the moulding units 4.

The first series 7 of presser rollers and the second series 8 of presser rollers lie on respective planes that are parallel to one another and are distributed to apply opposite pressure actions PI, P2 simultaneously on several contact zones distributed equally respectively on the first 5A and second 5B half mould of each moulding unit 4.

In one embodiment, on each presser roller 7, 8 resting and preferential wear rings are obtained, i.e. protruding circular portions intended to come into contact with, and apply pressure to, the respective half mould 5A or 5B.

It is possible to provide on each previously disclosed reinforcing superstructure 50A, 50B preferential resting and wear gibs intended for coming into contact with the corresponding rings of the presser rollers 7, 8 from which they receive the clamping pressure.

In each operative module M, M1,..., M11,..., Mn, all the presser rollers of a first 7 and second series 8 are driven by a single shared motion transmitting element 9 that can comprise a belt, a chain or other equivalent mechanical transmitting means.

The transmitting element 9 winds according to a 'zigzag' path alternately first around a roller of one series and subsequently around a corresponding conjugate roller of the other series of presser rollers and is moved by the respective motor 12.

In the apparatus there is provided an opening/translation/closing group 13, 14, 21 for opening, translating to an open position, and closing each unit 4, to thus enable the already moulded doors 2 to be removed and to load other half shells 3, 3' which are ready for receiving in a dispensing station S_{E} the polyurethane or phenol mixture for foaming further doors 2.

The opening/translating/closing group 13, 14, 21 comprises a grasping and opening unit 13, mounted on the operative module M3, and drivable slidably in a vertical direction along the upright 17 of this operative module M3 to grasp an upper half mould 5B and space the upper half mould 5B from the respective lower half mould 5A.

The opening unit 13 comprises pairs of removing wheels 10, or taking wheels 10, configured for engaging on opposite sides with a perimeter protrusion 19 of a half mould 5B, or better, of the reinforcing superstructure 50B connected to the half mould 5B, for grasping the half mould 5B and moving the half mould 5B away from the other conjugate half mould 5A/superstructure 50A. This enables the respective closed moulding unit 4 to be opened and made accessible to an operator 37 and/or robot for the loading/unloading operations. The pairs of wheels 10 are drivable for advancing the respective half mould 5B parallel and simultaneously to the advancement of the other conjugate half mould 5A.

The grasping and opening unit 13, for further facilitating accessibility during loading/unloading operations, is able to orientate the upper half mould 5B according to a tilted plane PI towards the operator 37 so as to facilitate the operations of cleaning and loading half shells 3'.

The opening operative module M3 comprises rollers 22 defining a resting and advancement plane for the lower half moulds (pallets) 5A. A "C"-shaped contrasting protuberance is further defined that is used if the foamed door were to remain affixed to the upper and lower half mould.

The opening/closing group further comprises a series of retaining and conveying units 21, provided on one or more respective intermediate operative modules M4, M5, M6, M7, arranged for advancing and maintaining in a raised position the upper half moulds 5B during loading/unloading and foaming operations. Each retaining, or holding and conveying unit 21, similarly to the grasping and opening unit 13, comprises pairs of wheels 10 for retaining and advancing the upper half moulds 5B.

The operative modules M4, M5, M6, M7 are provided with further rollers 22 that, together with the rollers 22 of the module M3, define the resting and advancement plane for the lower half moulds 5A.

The opening/closing group further comprises a closing unit 14, mounted on the closing operative module M8, configured in a similar manner to the grasping/opening unit 13. The closing unit 14 is thus provided with pairs of wheels 10 that engage with the aforesaid perimeter protrusion 19 of the reinforcing superstructure 50B of the upper half mould 5B and is drivable slidably in a vertical direction along the upright 17 of the operative module M8 to bring each upper half mould 5B back into contact on the respective lower conjugate half mould 5A.

Also the operative module M8 is provided with respective resting and advancement rollers 22 for the lower half moulds 5A.

The apparatus 1 can be provided with a monitoring and control system to ensure an optimum value of the clamping pressure that the presser rollers 7 and 8 apply to each moulding unit 4. For this purpose, one or more presser rollers 7 or 8 can be mounted on respective hinged brackets 23, that are rotatable around respective axes 35, and elastic means 24 is provided that preloads the respective presser roller with a determined force against the moulding units 4 that come each time into contact therewith. Sensor means 20 is further provided, for example load cells, that detects the pressure force with which the pressure roller acts on the moulding units 4, so as to enable an adjustment thereof.

In one embodiment, it is possible to provide, instead of the configuration with hinged brackets that has just been disclosed, a configuration in which the elastic means 24 comprises leaf springs that act directly on the supporting shafts of the rollers, to ensure the desired pressure load on the moulding units 4. In another possible embodiment (shown in Figure 22B), the shaft of the roller 7 is mounted on a "U"-shaped portion 55 that can flex elastically and is structurally configured for providing the desired pressure load.

According to a still further possible embodiment, devoid of specific spring elements, the elastic deformation of the shafts that support the presser rollers 7, 8 is exploited directly to establish and ensure the correct pressure to be applied to the moulding units 4.

The operation of the apparatus 1 is disclosed concisely below.

When a moulding unit 4 reaches the end of a foaming cycle, it reaches the opening/unloading zone Z1, at the module M3, where it is received and opened by the grasping/opening unit 13. Along the area that extends between the opening/unloading zone Z1 and the foaming/closing zone Z2, the operator 37 first removes the door 2 that has just been moulded, and inserts into the half moulds 5A, 5B a pair or pairs of half shells 3, 3' intended for generating a door or a set of doors.

In the loading/unloading zone two adjacent workstations are provided for two operators in charge of loading/unloading the respective pairs of doors to be foamed/pairs of foamed doors. Also a single workstation for a single operator can be provided and in this case the advancement speed or the arrest time are selected appropriately to enable the loading/unloading operations to be performed completely.

In order to permit this loading operation, one or more of the modules M4 to M7 can proceed in an indexed manner (for a total duration of 10 - 20 seconds), arresting the advancement of the lower half moulds 5A by resting rollers 22. Once the half shells 3, 3' are loaded, the pair of half moulds in question is taken to the dispensing station S_{E}, where one or more mixing heads 38, mounted on a robot or manipulator that is moved by suitable hydraulic or electric actuators are moved by the robot above the lower half mould 5A onto which the requested dose of polyurethane/phenol mixture is poured.

Another advancement step is made to the operative module M8, the closing unit 14 of which, once the respective upper half mould 5B has been received, is lowered to close the moulding unit 4 containing the mixture expanding and immediately sent to the presser rollers of the subsequent module. The pressure generated by the expansion of the foam is from this moment contrasted by the action of the groups of presser rollers 7 and 8 acting on opposite faces of the moulding unit 4.

The polyurethane mixture can also be dispensed in the closing station in which the robot retracts, enabling the half moulds to close.

Bolts or other similar coupling means do not therefore need to be provided for the half moulds, as the clamping function, in addition to the conveying function, is effectively performed by the groups of suitably calibrated motor-driven presser rollers 7, 8.

The moulding unit 4, having reached the operative module M11, whilst it is kept constantly clamped, is transferred to the portion of upper path T_{R}, where it is advanced by the upper parts of the successively arranged modules M. The hot air, which accumulates in the upper zones of the heating chamber 11, ensures preheating of the moulds and facilitates the foaming process.

The moulding units 4, once it has reached the first module M1, is lowered to the lower portion T_{I}. After reaching the operative module M3, the moulding unit 4 is reopened to enable extraction of the just moulded door 2 and start up a new foaming cycle.

If it is desired to replace a moulding unit 4 with a new moulding unit, for example to produce a different type of door, the mould-changing station S_{CS} operates in the manner disclosed below. A new moulding unit (complete pallet) is loaded onto the module Mr and transferred onto the opening/closing module M_{AC}, where it is prepared, whilst the moulding unit to be removed is moved from the operative module M1 to the intermediate roller conveyor, i.e. to the module M_{R} where it can be removed by a forklift truck or other system. In the meantime, the advancement of the moulding units 4 that follow can be accelerated to recover and fill the place that has remained vacant following the removal of a moulding unit 4. Subsequently, it is possible to slow the advancement of further queued moulding units 4 to obtain a space within which to insert the new moulding unit which is temporary arrested on the opening/closing module M_{AC}.

The operative modules M_{AC} and M_{R} are thus both driven to advance the new moulding unit to the operative module M1 to be inserted into the advancement path P along which it will be opened, loaded with new half shells, subsequently polyurethane mixture dispensing and corresponding closing will occur.

As can be appreciated from what has been disclosed, the apparatus 1 and the corresponding method enable the objects declared above to be achieved. In particular, high versatility of use and productivity of the apparatus 1 are achieved that enable the operations of opening/closing the moulding units 4 to be accelerated, the latter being able to have a much simpler and lighter structure because they are devoid of unnecessary bolts or the like.

The apparatus 1 permits extreme flexibility and productive variety, with the possibility of adapting in real time to variable geometrical shapes of the half shells of a door, without this having to entail undesired machine downtime. The modular structure defined by the operative modules M is simplified and light, consequently it entails greater mechanical reliability and reduced weights and overall dimensions. As the inertial masses are reduced the apparatus can also be driven faster than is the case with prior-art apparatuses.

It is possible to configure and size the apparatus 1 in the desired manner according to the dimensions/types of objects to be processed and variations on and/or additions to what has been disclosed and illustrated in the attached drawings are possible.

## Claims

1. Method for foaming objects (2) having two dimensions prevailing on a third dimension and being provided with two coating elements (3, 3') of the shell or shaped panel type or of the flat or curved or thermoformed plate or sheet type, between said two coating elements (3, 3') there being interposed an intermediate layer (6) in expanded polyurethane or phenol material, wherein it comprises the steps of:
i). providing one or more moulding units (4), each comprising a first half mould (5A) and a second half mould (5B) suitable for receiving respective coating elements (3, 3') for coating said objects (2) to be foamed, and intended for being conveyed along a closed advancement path (P) in which a foaming cycle occurs;
ii). arranging in succession, one next to the other, according to a desired spatial sequence, a plurality of operative modules (M, M1,...M11,...,Mn) that are mutually distinct and separate, provided with dedicated driving devices that are independent of one another and mutually synchronisable, comprising first rolling means (7) and second rolling means (8) for clamping and conveying said moulding units (4), said first rolling means (7) and said second rolling means (8) respectively comprising a first series (7) of presser rollers and a second (8) series of presser rollers that are mutually parallel and distributed on planes that are parallel to one another, said operative modules (M, M1,...M11,..,Mn) being reciprocally combinable so as to make up a modular structure of a desired length and shape defining said advancement path (P),
iii). setting said first rolling means (7) and second rolling means (8) at a reciprocal operating distance (D) so as to define, along said advancement path (P), an advancement and clamping gap (I) for said moulding units (4);
iv). Inserting, respectively into said first half mould (5A) and into said second half mould (5B), conjugate coating elements (3, 3') of one or more respective objects (2),
v). dispensing on the coating element/s (3) contained in a half mould (5A) a quantity of polyurethane or phenol mixture,
vi). taking said first half mould (5A) and said second half mould (5B) to a mutually opposite position so as to define a respective closed moulding unit (4) in which the coating element/s (3; 3') contained in a half mould (5A; 5B) faces/face and matches/match the respective conjugate coating element/s (3'; 3) contained in the other half mould (5B; 5A);
vii). inserting said moulding unit (4) closed in said advancement and clamping gap (I) and
viii). exerting on opposite sides of said closed moulding unit (4) opposite pressure actions (P1; P2) by said first series (7) of presser rollers and said second series (8) of presser rollers respectively so as to maintain reciprocally closed and clamped said first (5A) and second (5B) half moulds and so as to contrast the thrusts exerted by the expanding foam,
ix). driving said first series (7) of presser rollers and said second series (8) of presser rollers to advance, maintaining in a closed and clamped configuration, said moulding unit (4) inside said advancement and clamping gap (I) and along said advancement path (P) to complete the respective foaming cycle, wherein along at least part of said advancement path (P) heating of said moulding units (4) is provided, wherein the first series (7) and second series (8) of presser rollers of each operative module (M, M1, ...; M11,....,Mn) are driven by a single motion transmitting element (9) of the belt or chain type, that winds according to a 'zigzag' path alternately first around a roller of one series and subsequently around a corresponding conjugate roller of the other series of presser rollers.

2. Method according to claim 1, wherein each half mould (5A, 5B) is reinforced by coupling with a respective reinforcing and centring pallet superstructure (50A, 50B), so that each moulding unit (4) is composed of a lower reinforcing superstructure or pallet (50A) with which a first half mould (5A) is coupled, and of an upper reinforcing superstructure or pallet (50B), with which a respective second half mould (5B) is coupled, in which said opposite pressure actions (P1, P2) are generated by the forced contact of said first reinforcing superstructure (50A) or of said half mould (5A) with said first series (7) of presser rollers and by the forced contact of said second pallet reinforcing superstructure (50B) or of said half mould (5B) with said second series (8) of presser rollers.

3. Method according to claim 1 or 2, wherein said first series (7) and second series (8) of presser rollers come simultaneously into contact with said closed moulding unit (4) to exert said opposite pressure actions (P1, P2) simultaneously on several contact zones distributed evenly respectively on said first (5A) and second (5B) half moulds so as to contrast the pressure of the expanding foam.

4. Method according to any preceding claim, wherein, along said closed advancement path (P) there is provided, by one or more operative modules (M3, M4, M5, M6, M7, M8) dedicated to opening, unloading, loading, foaming, closing steps, grasping a half mould (5B) by pairs of removing rotating means (10) that engage on opposite sides with a perimeter protrusion (19) of said half mould (5B) or of the reinforcing superstructure (50B) of said half mould (5B) for decoupling the half mould from the other conjugate half mould (5A) and moving the half mould to a spaced apart position to enable the moulded object/s to be removed and the coating elements (3, 3') to be loaded for foaming further objects (2), wherein between the steps of unloading the moulded objects and the steps of loading new coating elements (3, 3') and of dispensing said mixture, the two open half moulds (5A, 5B) are advanced along respective trajectories that are spaced apart from one another and are parallel to facilitate accessibility to an operator or robot during loading and/or unloading operations.

5. Method according to claim 4, wherein in the path portion (P) comprised between an opening and/or unloading zone (Z1) and the foaming and/or closing zone (Z2) of the moulding unit (4), a half mould (5A) is advanced on a lower advancement plane arranged horizontally to a first height (Q1), whilst the other half mould (5B) is advanced by said rotating removing means (10) to a second height (Q2) that is greater than said first height (Q1) along a tilted plane (PI) oriented towards the operator and/or robot.

6. Method according to any preceding claim, wherein each moulding unit (4), once closed and containing the expanding foam, is immediately transferred and inserted into the gap (I) defined by said presser rollers (7, 8).

7. Method according to claim 5, or 6 as appended to claim 5, wherein each moulding unit (4), once closed and containing the expanding foam, reaches an end-raising-operative module (M11) that lifts the moulding unit (4) to a return portion (T_{R}) of said path (P) extending horizontally to a third height (Q3) that is greater than said second height (Q2), and wherein said moulding unit (4), at the end of said return portion (T_{R}), reaches an end-lowering-operative module (M1) that returns said moulding unit (4) to said first height (Q1) on said horizontal lower advancement plane to send said moulding unit (4) to new opening and unloading steps and subsequent loading, foaming and closing steps for a new foaming cycle.

8. Method according to any preceding claim, wherein at least part of said advancement path (P) is enclosed inside a heating chamber (11) containing hot air for heating each moulding unit (4) to favour the foaming process.

9. Method according to any preceding claim, wherein there is provided, through load sensor means (20), detecting the pressure exerted on said moulding units by one or more rollers of said first (7) and second (8) series of presser rollers, and adjusting the pressure force with which said presser rollers maintain said moulding units (4) in a clamped configuration.

10. Method according to any preceding claim, wherein each operative module (M, M1,..., M11, ..., Mn) is driven independently of the others to move said moulding unit (4) at a different advancement speed from zone to zone of said advancement path (P) on the basis of the time required for the loading and/or unloading operations and the time required to complete the foaming reaction and shape-stabilising of the moulded objects (2).

11. Method according to any preceding claim, wherein said objects (2) comprise doors for a refrigerator and/or panels for refrigerator cells or for displays for foods.

12. Method according to any preceding claim, wherein said objects comprise doors for a refrigerator and said coating elements comprise a first half shell (3) and a second half shell (3') intended for defining respectively an internal side and an external side of the respective door, wherein during the loading step prior to foaming, said first half shell (3) is inserted into a respective lower half mould (5A) of said moulding unit (4) for foaming, and said second half shell (3') is inserted into an upper half mould (5B) of said moulding unit (4) for foaming.

13. Method according to any preceding claim, wherein one or more moulding units (4) are replaced with one or more new moulding units without arresting the productive cycle, comprising the following steps:
a. preparing a new moulding unit on an opening and/or closing module (M_{AC}), whilst the moulding unit to be removed is diverted by the operative module (M1) to a module (M_{R}) where it can be removed by a forklift truck or other system;
b. increasing the advancement speed of the moulding units (4) that follow to recover and fill the place left vacant following removal of the moulding unit (4) to be replaced;
c. subsequently slowing the advancement of further queued moulding units (4) to obtain a space into which to insert the new moulding unit waiting temporarily on the opening and/or closing module (M_{AC});
d. driving the operative modules (M_{AC}) and (M_{R}) to advance the new moulding unit towards said operative module (M1) and inserting said new moulding unit in said advancement path (P) along which it is opened, loaded with the new half shells, receives the dispensed polyurethane mixture and is closed.

14. Apparatus suitable for foaming objects (2) having two dimensions prevailing on a third dimension and each provided with two coating elements (3, 3') between which an intermediate layer (6) in expanded polyurethane or phenol material is interposed, comprising:
- a plurality of operative modules (M, M1, ..., M11,.., Mn) that are mutually distinct and separate, each provided with its own driving motor means (12) to be driven independently of the other operative modules, and each comprising first rolling means (7) and second rolling means (8) for clamping and conveying moulding units (4) along an advancement path (P), wherein each moulding unit (4) comprises a first half mould (5A) and a second half mould (5B) suitable for receiving respective coating elements (3, 3') of said objects (2) to be coated,
- said operative modules (M, M1, ..., M11,.., Mn) being reciprocally combinable so as to compose a modular structure of a desired length and shape defining said advancement path (P),
- said first rolling means (7) and said second rolling means (7) comprising a first series (7) of presser rollers and a second (8) series of presser rollers that are mutually parallel and distributed on planes that are parallel to one another and being positionable at a desired reciprocal operating distance (D) to define, along said advancement path (P), a gap (I) for the advancement and clamping of said moulding unit (4), said first series (7) of presser rollers and said second series (8) of presser rollers being configured for exerting on each moulding unit (4), on opposite sides, opposite pressure actions (P1, P2) so as to maintain reciprocally closed and clamped the respective first (5A) and second (5B) half moulds and so as to contrast the thrusts exerted by the expanding foam;
- said first series (7) and second series (8) of presser rollers of each operative module (M, M1,..., M11,..,Mn) being drivable by a single shared motion-transmission element (9) of the belt or chain type, that winds according to a 'zigzag' path alternately first on a roller of one series and subsequently on a corresponding conjugate roller of the other series of presser rollers,
- an opening and/or translation and/or closing group (13, 14, 21) suitable for opening, and subsequently reclosing each moulding unit (4) to enable the foamed objects to be removed and to enable loading of other coating elements (3, 3') which are ready for receiving in a dispensing station (S_{E}) the polyurethane or phenol mixture for foaming further objects (2),
- a pair of transferring devices (15) arranged respectively for raising each moulding unit (4) to an upper return portion (T_{R}) of said advancement path (P), and for lowering each moulding unit (4) from said upper return portion (T_{R}) of path to a lower return portion (T_{I}) of path along which the moulding units (4) are opened, unloaded, loaded and closed, and a
- heating chamber (11), bounded by a casing (41) and enclosing at least the upper part of one or more of said operative modules (M, M1, ...., M11,.., Mn), to heat each moulding unit (4) and promote the foaming process, a lower part of said casing (41) being provided with an open access portion (25) for operators and/or robots.

15. Apparatus according to claim 14, wherein said first series (7) of presser rollers and second series (8) of presser rollers are distributed for exerting opposite pressure actions (P1, P2) simultaneously on several equally distributed contact zones by the forced contact of said reinforcing superstructure (50A) or of said half mould (5A) with said first series (7) of presser rollers and by the forced contact of said reinforcing superstructure (50B) or of said half mould (5B) with said second series (8) of presser rollers to counteract the pressure of the expanding foam.

16. Apparatus according to any one of claims 14 to 15, wherein one or more operative modules (M2, M9, M10) are provided with a first series (7) and second series (8) of presser rollers located in a lower zone (30) along a forward portion of said advancement path (P), and with further first series (7) and second series (8) of presser rollers, located in an upper zone (31), along said return portion (T_{R}) of the advancement path (P).

17. Apparatus according to any one of claims 14 to 16, wherein each transferring device (15) is mounted on an operative module (M1; M11,..., Mn) located at a respective end of the apparatus (1), and comprises a first series (7) and a second series (8) of presser rollers mounted on a slide unit (16) that is slidingly drivable vertically along an upright (17) of the respective operative module (M1; M11,..., Mn).

18. Apparatus according to any one of claims 14 to 17, wherein said opening and/or translation and/or closing group (13, 14, 21) comprises pairs of removing rotating means (10) configured for engaging on opposite sides with a perimeter protrusion (19) obtained on a reinforcing superstructure (50B) of a half mould (5B) or obtained directly on said half mould (5B) to grasp and remove the half mould (5B) from the other conjugate half mould (5A) to make accessible the respective moulding unit (4) for the loading and/or unloading operations, said pairs of rotating means (10) being drivable for advancing the respective half mould (5B) parallel and simultaneously to the advancement of the other conjugate half mould (5A), to facilitate the accessibility to an operator or robot during the unloading and/or loading operations, and wherein said opening and/or closing unit (13, 14) is configured for grasping and rotating the upper half moulds (5B) according to tilted planes (PI) so as to orient them the upper half moulds (5B) towards an operator and/or robot to facilitate the cleaning operations thereof and to facilitate loading of the respective coating elements (3, 3').

19. Apparatus according to any one of claims 14 to 18, wherein said opening and/or translation and/or closing group (13, 14, 21) comprises:
a. a grasping and opening unit (13), mounted on an opening operative module (M3), and slidably drivable in a vertical direction along an upright (17) of said opening operative module (M3) to grasp and space an upper pallet (50B) or an upper half mould (5B) apart from the respective lower pallet (50A) or lower half mould (5A), wherein said opening operative module (M3) comprises rollers (22) defining a resting and advancement plane for the lower pallets (50 A) or lower half moulds (5A),
b. a series of holding and conveying units (21), provided on one or more respective intermediate operative modules (M4, M5, M6, M7), to advance the pallets (50B) or upper half moulds (5B) maintaining the pallets (50B) or upper half moulds (5B) in a raised position, said intermediate operative modules (M4, M5, M6, M7) comprising further rollers (22) defining said resting and advancement plane for the upper pallets (50B) or the upper half moulds (5B),
c. a closing unit (14), mounted on a closing operative module (M8), and drivable slidably in a vertical direction along a respective upright (17) of said closing operative module (M8) to return each upper half mould (5B) into contact and matching with the lower conjugate respective half mould (5A) lying on the respective resting and advancement rollers (22) of said closing operative module (M8).

20. Apparatus according to any one of claims 14 to 19, wherein one or more presser rollers (7, 8) are mounted on a respective hinged bracket (23) and are preloaded by respective elastic means (24) that act on said hinged bracket (23).

21. Apparatus according to any one of claims 14 to 20, wherein one or more supporting shafts of said presser rollers (7, 8) are coupled with respective elastic means (24), of the leaf type.

22. Apparatus according to claim 20 or 21, further comprising sensor means (20) to detect, and consequently permit the adjusting of the force with which one or more presser rollers (7, 8) presses on the reinforcing superstructure (50A, 50B) of the respective half mould (5A, 5B) or directly on the half mould (5A, 5B) to maintain it closed and clamped against the respective conjugate half mould (5B, 5A).

23. Apparatus according to any one of claims 14 to 22, further comprising a control unit (40) operationally connected to all the operative modules (M, M1, ...., M11,.., Mn), and able to drive each operative module independently of one another to move in an indexed manner or continuously said moulding units (4), at different advancement speeds from zone to zone of said advancement path (P) on the basis of the time required for the loading and/or unloading operations and the time required for completing the foaming reaction and shape-stabilising of the moulded objects (2).

24. Apparatus according to any one of claims 14 to 23 further comprising a mould-changing station (Scs) suitable for replacing one or more moulds with other different moulds, for foaming doors with variable geometries, said changing station (Scs) comprising an opening and/or closing module (M_{AC}) for the moulding units (4), and an auxiliary module (M_{R}) that includes an intermediate roller support, positioned between said module (M_{AC}) and said module (M1).

25. Operative module configured for being mounted in said apparatus (1) according to any one of claims 14 to 24, comprising:
a. a first series (7) and a second series (8) of presser rollers for maintaining reciprocally closed and clamped the respective first (5A) and second (5B) half moulds and conveying said moulding units (4);
b. said first series (7) and second series (8) of presser rollers being positionable at a desired reciprocal operating distance (D) to define a gap (I) for the advancement and clamping of said moulding unit (4), said first series (7) and second series (8) of presser rollers being configured for exerting on each moulding unit (4), on opposite sides, opposite pressure actions (P1, P2) to contrast the thrusts exerted by the expanding foam;
c. driving motor means (12) for said first series (7) and second series (8) of presser rollers,
d. a shared motion-transmission element (9) of the belt or chain type, that winds according to a 'zigzag' path alternately first on a roller of one series and subsequently on a corresponding conjugate roller of the other series of presser rollers to transmit the motion from said driving motor means (12) simultaneously to all the presser rollers of said first series (7) and second series (8) of presser rollers,
e. a transferring device (15) for transferring said moulding units (4) from a first portion of the path (P) placed at a first height (Q1) to a second portion of the path (P) placed at another greater height (Q3) or vice versa, wherein said transferring device (15) is defined by a said first series (7) and second series (8) of presser rollers mounted on a slide unit (16) drivable vertically slidably along an upright (17) of said operative module (M1, M11; Mn).

26. Operative module configured for being mounted in said apparatus (1) according to any one of claims 14 to 24, comprising:
a. a first series (7) and a second series (8) of presser rollers for clamping and conveying said moulding units (4);
b. said first series (7) and second series (8) of presser rollers being positionable at a desired reciprocal operating distance (D) to define a gap (I) for the advancement and clamping of said moulding unit (4), said first series (7) and second series (8) of presser rollers being configured for exerting on each moulding unit (4), on opposite sides, opposite pressure actions (P1, P2) so as to maintain reciprocally closed and clamped the respective first (5A) and second (5B) half moulds and so as to contrast the thrusts exerted by the expanding foam;
c. driving motor means (12) for said first series (7) and second series (8) of presser rollers,
d. a shared motion-transmission element (9) of the belt or chain type, that winds according to a 'zigzag' path alternately first on a roller of one series and subsequently on a corresponding conjugate roller of the other series of presser rollers to transmit the motion from said driving motor means (12) simultaneously to all the presser rollers of said first series (7) and second series (8) of presser rollers, wherein said first series (7) and said second series (8) of presser rollers are driven by a common driving motor (12) and are placed in a lower zone (30) of said operative module (M2, M9, M10),
e. there being also provided a further first series (7) of presser rollers and a further second series (8) of presser rollers, driven by a further common driving motor (12) placed in an upper zone (31) of said operative module (M2, M9, M10..,Mn-1), and having a respective shared motion-transmission element (9) of the belt or chain type, that winds according to a 'zigzag' path alternately first on a roller of said further first series (7) and subsequently on a corresponding conjugate roller of said further second series (8) of presser rollers to transmit the motion from said further common driving motor (12) simultaneously to all the presser rollers of said first series (7) and second series (8) of presser rollers, and
- a grasping and opening and/or closing unit (13, 14) for said moulding unit (4), which is mounted on an upright (17) of said operative module (M3, M8) and is drivable slidably in a vertical direction along said upright (17) and comprising a plurality of pairs of removing rotating means (10) configured for engaging on opposite sides with a perimeter protrusion (19) of a reinforcing superstructure (50B) of the respective half mould (5B) or of the half mould (5B) for grasping it and moving it away from the other connected half mould (5A) to enable access to the respective moulding unit (4) for the loading and/or unloading operations, said pairs of rotating means (10) being drivable for advancing the respective half mould (5B) parallel and simultaneously to the advancement of the other connected half mould (5A), to facilitate accessibility to an operator and/or robot during the loading and/or unloading operations, and wherein said opening and/or closing-device (13, 14) is configured for grasping and rotating the upper half moulds (5B) according to tilted planes (PI) so as to orientate them towards an operator and/or robot to facilitate the operations thereof of cleaning and loading the respective coating elements (3, 3'), there being further provided resting and advancement rollers (22) for the lower half moulds (5A).

27. Operative module according to claim 26, comprising a resting and conveying unit (21) for said upper half moulds (5B), provided with pairs of rotating means (10) configured for engaging on opposite sides with perimeter protrusions (19) of the upper half moulds (5B) or with reinforcing superstructures (50B) for reinforcing said upper half moulds (5B), to advance the latter (5B) maintaining the upper half moulds (5B) in a raised position with respect to the respective lower half moulds (5A), there being further provided resting and advancement rollers (22) for the lower half moulds (5A).

## Patentansprüche

1. Verfahren zum Schäumen von Objekten (2) mit zwei Dimensionen, die in einer dritten Dimension vorherrschen und mit zwei Beschichtungselementen (3, 3') vom Typ einer Schale oder eines geformten Panels oder vom Typ einer flachen oder gekrümmten oder thermogeformten Platte oder vom Typ einer Folie versehen sind, wobei zwischen den beiden Beschichtungselementen (3, 3') eine Zwischenschicht (6) aus expandiertem Polyurethan- oder Phenolmaterial eingefügt wird, wobei es die folgenden Schritte umfasst:
i). Bereitstellen einer oder mehrerer Formeinheiten (4), die jeweils eine erste Halbform (5A) und eine zweite Halbform (5B) umfassen, die geeignet sind, entsprechende Beschichtungselemente (3, 3') zum Beschichten der zu schäumenden Objekte (2) aufzunehmen, und die dazu bestimmt sind, entlang eines geschlossenen Vorschubweges (P) transportiert zu werden, in dem ein Schaumzyklus stattfindet;
ii). Anordnen einer Vielzahl von Betriebsmodulen (M, M1, ... M11, ... Mn) nacheinander, entsprechend einer gewünschten räumlichen Reihenfolge, die sich voneinander unterscheiden und trennen, mit speziellen Antriebsvorrichtungen versehen sind, die unabhängig voneinander und gegenseitig synchronisierbar sind, umfassend ein erstes Walzmittel (7) und ein zweites Walzmittel (8) zum Klemmen und Fördern der Formeinheiten (4), wobei das erste Walzmittel (7) und das zweite Walzmittel (8) jeweils eine erste Reihe (7) von Presswalzen und eine zweite (8) Reihe von Presswalzen umfassen, die zueinander parallel und auf zueinander parallelen Ebenen verteilt sind, wobei die Betriebsmodule (M, M1, ... M11, ... Mn) gegenseitig kombinierbar sind, um eine modulare Struktur mit einer gewünschten Länge und Form zu bilden, die den Vorschubweg (P) definiert,
iii). Einstellen des ersten Walzmittels (7) und des zweiten Walzmittels (8) auf einen gegenseitigen Betriebsabstand (D), um entlang des Vorschubwegs (P) einen Vorschub- und Klemmspalt (I) für die Formeinheiten (4) zu definieren;
iv). Einfügen von konjugierten Beschichtungselementen (3, 3') von einem oder mehreren jeweiligen Objekten (2) in die erste Halbform (5A) bzw. in die zweite Halbform (5B),
v). Abgeben einer Menge Polyurethan- oder Phenolmischung auf das/die in einer Halbform (5A) enthaltene(n) Beschichtungselement(e) (3),
vi). Bringen der ersten Halbform (5A) und der zweiten Halbform (5B) in eine gegenseitig entgegengesetzte Position, um eine jeweilige geschlossene Formeinheit (4) zu definieren, in der das/die in einer Halbform (5A; 5B) enthaltene(n) Beschichtungselement(e) (3; 3') dem/den jeweiligen konjugierten Beschichtungselement(en) (3'; 3), die in der anderen Halbform (5B; 5A) enthalten sind, zugewandt ist/sind und entspricht/entsprechen;
vii). Einsetzen der Formeinheit (4), die in dem Vorschub- und Klemmspalt (I) geschlossen ist, und
viii). Ausüben von Gegendruckwirkungen (P1; P2) durch die erste Reihe (7) von Presswalzen und die zweite Reihe (8) von Presswalzen auf entgegengesetzte Seiten der geschlossenen Formeinheit (4), um die erste (5A) und zweite (5B) Halbform gegenseitig geschlossen und eingespannt zu halten und um die vom expandierenden Schaum ausgeübten Druckkräfte zu kontrastieren,
ix). Antreiben der ersten Reihe (7) von Presswalzen und der zweiten Reihe (8) von Presswalzen zum Vorwärtsbewegen, Halten in einer geschlossenen und eingespannten Konfiguration, der Formeinheit (4) innerhalb des Vorschub- und Klemmspalts (I) und entlang des Vorschubweges (P) zum Abschließen des jeweiligen Schaumzyklus, wobei entlang mindestens eines Teils des Vorschubweges (P) das Erwärmen der Formeinheiten (4) bereitgestellt wird, wobei die erste Reihe (7) und die zweite Reihe (8) von Presswalzen von jedem Arbeitsmodul (M, M1, .... M11, .... Mn) von einem einzigen Bewegungsübertragungselement (9) vom Band- oder Kettentyp angetrieben werden, das sich gemäß einem "Zickzack"-Weg abwechselnd zuerst um eine Walze einer Reihe und anschließend um eine entsprechende konjugierte Walze der anderen Reihe von Presswalzen wickelt.

2. Verfahren nach Anspruch 1, wobei jede Halbform (5A, 5B) durch Kopplung mit einem jeweiligen verstärkenden und zentrierenden Palettenüberbau (50A, 50B) verstärkt wird, so dass jede Formeinheit (4) aus einem unteren verstärkenden Überbau oder einer Palette (50A), mit der eine erste Halbform (5A) gekoppelt ist, und aus einem oberen verstärkenden Überbau oder einer Palette (50B) besteht, mit der jeweils eine zweite Halbform (5B) gekoppelt ist, bei der die Gegendruckwirkungen (P1, P2) durch den Zwangskontakt des ersten verstärkten Überbaus (50A) oder der Halbform (5A) mit der ersten Reihe (7) von Presswalzen und durch den Zwangskontakt des zweiten verstärkten Palettenüberbaus (50B) oder der Halbform (5B) mit der zweiten Reihe (8) von Presswalzen erzeugt werden.

3. Verfahren nach Anspruch 1 oder 2, wobei die erste Reihe (7) und die zweite Reihe (8) von Presswalzen gleichzeitig mit der geschlossenen Formeinheit (4) in Kontakt kommen, um die Gegendruckwirkungen (P1, P2) gleichzeitig auf mehrere Kontaktzonen auszuüben, die jeweils gleichmäßig auf die erste (5A) und zweite (5B) Halbform verteilt sind, um den Druck des expandierenden Schaums zu kontrastieren.

4. Verfahren nach einem der vorstehenden Ansprüche, wobei entlang des geschlossenen Beförderungsweges (P) ein oder mehrere Betriebsmodule (M3, M4, M5, M6, M7, M8) vorgesehen sind, die zum Öffnen, Entladen, Laden, Schäumen und Schließen bestimmt sind, Greifen einer Halbform (5B) durch Paare von entfernenden rotierenden Mitteln (10), die auf gegenüberliegenden Seiten mit einem Umfangsvorsprung (19) der Halbform (5B) oder des verstärkten Überbaus (50B) der Halbform (5B) in Eingriff stehen, um die Halbform von der anderen konjugierten Halbform (5A) zu entkoppeln und die Halbform in eine beabstandete Position zu bewegen, um das Entfernen des/der geformten Gegenstandes/Gegenstände und der Beschichtungselemente (3, 3') zu ermöglichen, die zum Schäumen weiterer Objekte (2) zu beladen sind, wobei zwischen den Schritten des Entladens der geformten Objekte und den Schritten des Beladens neuer Beschichtungselemente (3, 3') und des Dosierens des Gemisches die beiden offenen Halbformen (5A, 5B) entlang der jeweiligen Trajektorien vorgeschoben werden, die voneinander beabstandet sind und parallel sind, um die Zugänglichkeit zu einem Bediener oder Roboter während des Be- und/oder Entladevorgangs zu erleichtern.

5. Verfahren nach Anspruch 4, wobei in dem zwischen einer Öffnungs- und/oder Entladezone (Z1) und der Schäum- und/oder Schließzone (Z2) der Formeinheit (4) liegenden Wegabschnitt (P) eine Halbform (5A) auf einer unteren, horizontal bis zu einer ersten Höhe (Q1) angeordneten Vorschubebene vorgeschoben wird, während die andere Halbform (5B) von den rotierenden Entfernungsmitteln (10) auf eine zweite Höhe (Q2) vorgeschoben wird, die größer ist als die erste Höhe (Q1) entlang einer auf den Bediener und/oder Roboter ausgerichteten geneigten Ebene (PI).

6. Verfahren nach einem der vorstehenden Ansprüche, wobei jede Formeinheit (4), sobald sie geschlossen ist und den expandierenden Schaumstoff enthält, sofort übertragen und in den durch die Presswalzen (7, 8) definierten Spalt (I) eingesetzt wird.

7. Verfahren nach Anspruch 5 oder 6, der Anspruch 5 beigefügt wurde, wobei jede Formeinheit (4), sobald sie geschlossen ist und den expandierenden Schaum enthält, ein Endanhebungs-Betriebsmodul (M11) erreicht, das die Formeinheit (4) zu einem Rücklaufabschnitt (T_{R}) des Weges (P) anhebt, der sich horizontal zu einer dritten Höhe (Q3) erstreckt, die größer als die zweite Höhe (Q2) ist, und wobei die Formeinheit (4) am Ende des Rücklaufabschnitts (T_{R}) ein Endabsenkungsmodul (M1) erreicht, das die Formeinheit (4) auf der horizontalen unteren Vorschubebene auf die erste Höhe (Q1) zurückführt, um die Formeinheit (4) zu neuen Öffnungs- und Entladeschritten und nachfolgenden Lade-, Schäum- und Schließschritten für einen neuen Schäumungszyklus zu senden.

8. Verfahren nach einem der vorstehenden Ansprüche, wobei mindestens ein Teil des Vorschubweges (P) in einer Heizkammer (11) eingeschlossen ist, die Heißluft zum Erwärmen jeder Formeinheit (4) enthält, um den Schäumungsprozess zu begünstigen.

9. Verfahren nach einem der vorstehenden Ansprüche, wobei über Lastsensoreinrichtungen (20) der Druck, der von einer oder mehreren Walzen der ersten (7) und zweiten (8) Reihe von Presswalzen auf die Formeinheiten ausgeübt wird, erfasst und die Druckkraft, mit der die Presswalzen die Formeinheiten (4) in einer eingespannten Konfiguration halten, eingestellt wird.

10. Verfahren nach einem der vorstehenden Ansprüche, wobei jedes Betriebsmodul (M, M1, ..., M11, ..., Mn) unabhängig voneinander angetrieben wird, um die Formeinheit (4) mit einer unterschiedlichen Vorschubgeschwindigkeit von Zone zu Zone des Vorschubweges (P) auf der Grundlage der für die Be- und/oder Entladevorgänge benötigten Zeit und der Zeit, die benötigt wird, um die Schaumreaktion und die Formstabilisierung der geformten Objekte (2) abzuschließen, zu bewegen.

11. Verfahren nach einem der vorstehenden Ansprüche, wobei die Objekte (2) Türen für einen Kühlschrank und/oder Panele für Kühlzellen oder für Displays für Lebensmittel umfassen.

12. Verfahren nach einem der vorstehenden Ansprüche, wobei die Objekte Türen für einen Kühlschrank umfassen und die Beschichtungselemente eine erste Halbform (3) und eine zweite Halbform (3') umfassen, die dazu bestimmt sind, eine Innenseite bzw. eine Außenseite der jeweiligen Tür zu definieren, wobei während des Ladeschritts vor dem Schäumen die erste Halbform (3) in eine jeweilige untere Halbform (5A) der Formeinheit (4) zum Schäumen eingesetzt wird und die zweite Halbform (3') in eine obere Halbform (5B) der Formeinheit (4) zum Schäumen eingesetzt wird.

13. Verfahren nach einem der vorstehenden Ansprüche, wobei eine oder mehrere Formeinheiten (4) durch eine oder mehrere neue Formeinheiten ersetzt werden, ohne den Produktionszyklus zu stoppen, umfassend die folgenden Schritte:
a. Vorbereiten einer neuen Formeinheit auf einem Öffnungs- und/oder Schließmodul (M_{AC}), während die zu entfernende Formeinheit durch das Betriebsmodul (M1) zu einem Modul (M_{R}) umgeleitet wird, wo sie durch einen Gabelstapler oder ein anderes System entfernt werden kann;
b. Erhöhen der Vorschubgeschwindigkeit der Formeinheiten (4), die folgen, um den nach dem Entfernen der zu ersetzenden Formeinheit (4) frei gebliebenen Platz wiederherzustellen und zu füllen;
c. anschließend Verlangsamen des Fortschritts weiterer in Warteschlangen stehender Formeinheiten (4), um einen Platz zu erhalten, in den die neue Formeinheit eingesetzt werden kann, die vorübergehend auf das Öffnungs- und/oder Schließmodul (M_{AC}) wartet;
d. Antreiben der Betriebsmodule (M_{AC}) und (M_{R}), um die neue Formeinheit in Richtung des Betriebsmoduls (M1) vorzurücken, und Einsetzen der neuen Formeinheit in den Vorschubweg (P), entlang dessen sie geöffnet, mit den neuen Halbformen beladen, die abgegebene Polyurethanmischung aufnimmt und geschlossen wird.

14. Vorrichtung zum Schäumen von Objekten (2) mit zwei Dimensionen, die in einer dritten Dimension vorherrschen und jeweils mit zwei Beschichtungselementen (3, 3') versehen sind, zwischen denen eine Zwischenschicht (6) aus expandiertem Polyurethan- oder Phenolmaterial angeordnet ist, umfassend:
- eine Vielzahl von Betriebsmodulen (M, M1, ..., M11, ..., Mn), die sich voneinander unterscheiden und trennen, jeweils mit einem eigenen Antriebsmotor (12) versehen sind, der unabhängig von den anderen Betriebsmodulen anzutreiben ist, und jeweils ein erstes Walzmittel (7) und ein zweites Walzmittel (8) zum Klemmen und Fördern von Formeinheiten (4) entlang eines Vorschubweges (P) umfassen, wobei jede Formeinheit (4) eine erste Halbform (5A) und eine zweite Halbform (5B) umfasst, die zur Aufnahme der jeweiligen Beschichtungselemente (3, 3') der zu beschichtenden Objekte (2) geeignet sind,
- wobei die Betriebsmodule (M, M1, ..., M11, ..., Mn) wechselseitig kombinierbar sind, um eine modulare Struktur mit einer gewünschten Länge und Form zu bilden, die den Vorschubweg (P) definiert,
- wobei das erste Walzmittel (7) und das zweite Walzmittel (7) eine erste Reihe (7) von Presswalzen und eine zweite (8) Reihe von Presswalzen umfassen, die zueinander parallel sind und auf Ebenen verteilt sind, die parallel zueinander verlaufen und in einem gewünschten gegenseitigen Arbeitsabstand (D) positionierbar sind, um entlang des Vorschubwegs (P) einen Spalt (I) für das Vorschieben und Einspannen der Formeinheit (4) zu definieren, wobei die erste Reihe (7) von Presswalzen und die zweite Reihe (8) von Presswalzen konfiguriert ist, um auf jede Formeinheit (4) auf entgegengesetzten Seiten Gegendruckwirkungen (P1, P2) auszuüben, um die erste (5A) bzw. zweite (5B) Halbform gegenseitig geschlossen und eingespannt zu halten und um die vom expandierenden Schaum ausgeübten Druckkräfte zu kontrastieren;
- wobei die erste Reihe (7) und die zweite Reihe (8) von Presswalzen von jedem Betriebsmodul (M, M1, ..., M11, ..., Mn) von einem einzigen gemeinsamen Bewegungsübertragungselement (9) vom Riemen- oder Kettentyp antreibbar sind, das sich gemäß einem "Zickzack"-Weg abwechselnd zuerst auf eine Walze der einen Reihe und anschließend auf eine entsprechende konjugierte Walze der anderen Reihe von Presswalzen wickelt,
- eine Öffnungs- und/oder Verschiebe- und/oder Schließgruppe (13, 14, 21), die zum Öffnen und anschließenden Wiederverschließen jeder Formeinheit (4) geeignet ist, um das Entfernen der geschäumten Gegenstände und das Laden anderer Beschichtungselemente (3, 3') zu ermöglichen, die zur Aufnahme der Polyurethan- oder Phenolmischung zum Schäumen weiterer Objekte (2) in einer Abgabestation (S_{E}) bereit sind,
- ein Paar Übertragungsvorrichtungen (15), die jeweils zum Anheben jeder Formeinheit (4) zu einem oberen Rücklaufabschnitt (T_{R}) des Vorschubwegs (P) und zum Absenken jeder Formeinheit (4) von dem oberen Rücklaufabschnitt (T_{R}) des Weges zu einem unteren Rücklaufabschnitt (T_{I}) des Weges, entlang dem die Formeinheiten (4) geöffnet, entladen, geladen und geschlossen werden, angeordnet sind, und eine
- Heizkammer (11), die durch ein Gehäuse (41) begrenzt ist und mindestens den oberen Teil eines oder mehrerer der Betriebsmodule (M, M1, ..., M11, ..., Mn) umschließt, um jede Formeinheit (4) zu erwärmen und den Schäumungsprozess zu fördern, wobei ein unterer Teil des Gehäuses (41) mit einem offenen Zugangsabschnitt (25) für Bediener und/oder Roboter versehen ist.

15. Vorrichtung nach Anspruch 14, wobei die erste Reihe (7) von Presswalzen und die zweite Reihe (8) von Presswalzen verteilt sind, um Gegendruckwirkungen (P1, P2) gleichzeitig auf mehrere gleich verteilte Kontaktzonen auszuüben, durch den Zwangskontakt des verstärkten Überbaus (50A) oder der Halbform (5A) mit der ersten Reihe (7) von Presswalzen und durch den Zwangskontakt des verstärkten Überbaus (50B) oder der Halbform (5B) mit der zweiten Reihe (8) von Presswalzen, um dem Druck des Schaums entgegenzuwirken.

16. Vorrichtung nach einem der Ansprüche 14 bis 15, wobei ein oder mehrere Betriebsmodule (M2, M9, M10) mit einer ersten Reihe (7) und einer zweiten Reihe (8) von Presswalzen versehen sind, die sich in einer unteren Zone (30) entlang eines vorderen Abschnitts des Vorschubwegs (P) befinden, und mit einer weiteren ersten Reihe (7) und einer zweiten Reihe (8) von Presswalzen, die sich in einer oberen Zone (31) befinden, entlang des Rücklaufabschnitts (T_{R}) des Vorschubwegs (P).

17. Vorrichtung nach einem der Ansprüche 14 bis 16, wobei jede Übertragungsvorrichtung (15) auf einem Betriebsmodul (M1; M11, ..., Mn) montiert ist, das an einem jeweiligen Ende der Vorrichtung (1) angeordnet ist, und eine erste Reihe (7) und eine zweite Reihe (8) von Presswalzen umfasst, die an einer Gleiteinheit (16) montiert sind, die entlang eines Pfostens (17) des jeweiligen Betriebsmoduls (M1; M11, ..., Mn) vertikal verschiebbar ist.

18. Vorrichtung nach einem der Ansprüche 14 bis 17, wobei die Öffnungs- und/oder Verschiebe- und/oder Schließgruppe (13, 14, 21) Paare von entfernenden Drehmitteln (10) umfasst, die konfiguriert sind, um auf gegenüberliegenden Seiten mit einem Umfangsvorsprung (19) in Eingriff zu kommen, der an einem verstärkten Überbau (50B) einer Halbform (5B) oder direkt an der Halbform (5B) erhalten wird, um die Halbform (5B) zu greifen und aus der anderen konjugierten Halbform (5A) zu entfernen, um die jeweilige Formeinheit (4) für die Lade- und/oder Entladevorgänge zugänglich zu machen, wobei die Paare von Drehmitteln (10) antreibbar sind, um die jeweilige Halbform (5B) parallel und gleichzeitig mit der Weiterentwicklung der anderen konjugierten Halbform (5A) vorwärts zu bewegen, um die Zugänglichkeit zu einem Bediener oder Roboter während des Entlade- und/oder Ladevorgangs zu erleichtern, und wobei die Öffnungs- und/oder Schließeinheit (13, 14) zum Greifen und Drehen der oberen Halbformen (5B) gemäß geneigten Ebenen (PI) konfiguriert ist, um sie die oberen Halbformen (5B) in Richtung eines Bedieners und/oder Roboters auszurichten, um deren Reinigungsarbeiten zu erleichtern und das Laden der jeweiligen Beschichtungselemente (3, 3') zu erleichtern.

19. Vorrichtung nach einem der Ansprüche 14 bis 18, wobei die Öffnungs- und/oder Verschiebungs- und/oder Schließgruppe (13, 14, 21) Folgendes umfasst:
a. eine Greif- und Öffnungseinheit (13), die auf einem Öffnungsbetriebsmodul (M3) montiert und in vertikaler Richtung entlang eines Pfostens (17) des Öffnungsbetriebsmoduls (M3) verschiebbar antreibbar ist, um eine obere Palette (50B) oder eine obere Halbform (5B) außerhalb der jeweiligen unteren Palette (50A) oder unteren Halbform (5A) zu greifen und zu platzieren, wobei das Öffnungsbetriebsmodul (M3) Walzen (22) umfasst, die eine Ruhe- und Transportebene für die unteren Paletten (50A) oder unteren Halbformen (5A) definieren,
b. eine Reihe von Halte- und Fördereinheiten (21), die an einem oder mehreren jeweiligen Zwischenbetriebsmodulen (M4, M5, M6, M7) vorgesehen sind, um die Paletten (50B) oder oberen Halbformen (5B) vorzuschieben, die die Paletten (50B) oder oberen Halbformen (5B) in einer angehobenen Position halten, wobei die Zwischenbetriebsmodule (M4, M5, M6, M7) weitere Walzen (22) umfassen, die die Ruhe- und Vorschubebene für die oberen Paletten (50B) oder die oberen Halbformen (5B) definieren,
c. eine Schließeinheit (14), die auf einem Schließbetriebsmodul (M8) montiert und entlang eines jeweiligen Pfostens (17) des Schließbetriebsmoduls (M8) verschiebbar in vertikaler Richtung antreibbar ist, um jede obere Halbform (5B) in Kontakt zu bringen und mit der unteren konjugierten jeweiligen Halbform (5A), die auf den jeweiligen Ruhe- und Vorschubwalzen (22) des Schließbetriebsmoduls (M8) liegt, anzupassen.

20. Vorrichtung nach einem der Ansprüche 14 bis 19, wobei eine oder mehrere Presswalzen (7, 8) auf einer jeweiligen Klapphalterung (23) gelagert und durch entsprechende elastische Mittel (24) vorgespannt sind, die auf die Klapphalterung (23) wirken.

21. Vorrichtung nach einem der Ansprüche 14 bis 20, wobei eine oder mehrere Stützwellen der Presswalzen (7, 8) mit entsprechenden elastischen Mitteln (24) vom Blatttyp gekoppelt sind.

22. Vorrichtung nach Anspruch 20 oder 21, ferner umfassend Sensormittel (20) zum Erfassen und damit zum Einstellen der Kraft, mit der eine oder mehrere Presswalzen (7, 8) auf den verstärkenden Überbau (50A, 50B) der jeweiligen Halbform (5A, 5B) oder direkt auf die Halbform (5A, 5B) drücken, um sie geschlossen und gegen die jeweilige konjugierte Halbform (5B, 5A) geklemmt zu halten.

23. Vorrichtung nach einem der Ansprüche 14 bis 22, ferner umfassend eine Steuereinheit (40), die mit allen Betriebsmodulen (M, M1, ..., M11, ..., Mn) funktionsfähig verbunden ist und in der Lage ist, jedes Betriebsmodul unabhängig voneinander anzutreiben, um die Formeinheiten (4) indexiert oder kontinuierlich mit unterschiedlichen Vorschubgeschwindigkeiten von Zone zu Zone des Vorschubweges (P) auf der Grundlage der für die Be- und/oder Entladevorgänge erforderlichen Zeit und der Zeit, die für das Abschließen der Schaumreaktion und der Formstabilisierung der geformten Objekte (2) benötigt wird, zu bewegen.

24. Vorrichtung nach einem der Ansprüche 14 bis 23, ferner umfassend eine Formwechselstation (S_{CS}), die geeignet ist, eine oder mehrere Formen durch andere verschiedene Formen zu ersetzen, um Türen mit variablen Geometrien zu schäumen, wobei die Wechselstation (S_{CS}) ein Öffnungs- und/oder Schließmodul (M_{AC}) für die Formeinheiten (4) und ein Hilfsmodul (M_{R}) umfasst, das einen zwischen dem Modul (M_{AC}) und dem Modul (M1) angeordneten Zwischenwalzenhalter beinhaltet.

25. Betriebsmodul, das konfiguriert ist, um in der Vorrichtung (1) nach einem der Ansprüche 14 bis 24 montiert zu werden, umfassend:
a. eine erste Reihe (7) und eine zweite Reihe (8) von Presswalzen zum geschlossen und eingespannt Halten der jeweiligen ersten (5A) und zweiten (5B) Halbform und zum Fördern der Formeinheiten (4);
b. wobei die erste Reihe (7) und die zweite Reihe (8) von Presswalzen in einem gewünschten gegenseitigen Arbeitsabstand (D) positionierbar sind, um einen Spalt (I) für das Vorschieben und Klemmen der Formeinheit (4) zu definieren, wobei die erste Reihe (7) und die zweite Reihe (8) von Presswalzen konfiguriert sind, um auf jede Formeinheit (4) auf entgegengesetzte Seiten Gegendruckwirkungen (P1, P2) auszuüben, um die durch den expandierenden Schaum ausgeübten Druckkräfte zu kontrastieren;
c. Antriebsmotormittel (12) für die erste Reihe (7) und zweite Reihe (8) von Presswalzen,
d. ein gemeinsames Bewegungsübertragungselement (9) vom Riemen- oder Kettentyp, das sich gemäß einem "Zickzack"-Weg abwechselnd zuerst auf eine Walze einer Reihe und anschließend auf eine entsprechende konjugierte Walze der anderen Reihe von Presswalzen wickelt, um die Bewegung von dem Antriebsmotormittel (12) gleichzeitig auf alle Presswalzen der ersten Reihe (7) und zweiten Reihe (8) von Presswalzen zu übertragen,
e. eine Übertragungsvorrichtung (15) zum Übertragen der Formeinheiten (4) von einem ersten Abschnitt des Weges (P), der auf einer ersten Höhe (Q1) angeordnet ist, auf einen zweiten Abschnitt des Weges (P), der auf einer anderen größeren Höhe (Q3) angeordnet ist, oder umgekehrt, wobei die Übertragungsvorrichtung (15) durch eine erste Reihe (7) und eine zweite Reihe (8) von Presswalzen definiert ist, die auf einer Gleiteinheit (16) montiert sind, die vertikal verschiebbar entlang eines Pfostens (17) des Betriebsmoduls (M1, M11; Mn) antreibbar ist.

26. Betriebsmodul, das konfiguriert ist, um in der Vorrichtung (1) nach einem der Ansprüche 14 bis 24 montiert zu werden, umfassend:
a. eine erste Reihe (7) und eine zweite Reihe (8) von Presswalzen zum Klemmen und Fördern der Formeinheiten (4);
b. wobei die erste Reihe (7) und die zweite Reihe (8) von Presswalzen in einem gewünschten gegenseitigen Arbeitsabstand (D) positionierbar sind, um einen Spalt (I) für das Vorschieben und Klemmen der Formeinheit (4) zu definieren, wobei die erste Reihe (7) und die zweite Reihe (8) von Presswalzen konfiguriert sind, um auf jede Formeinheit (4) auf entgegengesetzte Seiten Gegendruckwirkungen (P1, P2) auszuüben, um die erste Halbform (5A) bzw. die zweite Halbform (5B) gegenseitig geschlossen und geklemmt zu halten, und um die durch den expandierenden Schaum ausgeübten Druckkräfte zu kontrastieren;
c. Antriebsmotormittel (12) für die erste Reihe (7) und zweite Reihe (8) von Presswalzen,
d. ein gemeinsames Bewegungsübertragungselement (9) vom Riemen- oder Kettentyp, das sich gemäß einem "Zickzack"-Weg abwechselnd zuerst auf eine Walze einer Reihe und anschließend auf eine entsprechende konjugierte Walze der anderen Reihe von Presswalzen wickelt, um die Bewegung von dem Antriebsmotormittel (12) gleichzeitig auf alle Presswalzen, der ersten Reihe (7) und zweiten Reihe (8) von Presswalzen zu übertragen, wobei die erste Reihe (7) und die zweite Reihe (8) von Presswalzen von einem gemeinsamen Antriebsmotor (12) angetrieben werden und in einer unteren Zone (30) des Betriebsmoduls (M2, M9, M10) angeordnet sind,
e. wobei auch eine weitere erste Reihe (7) von Presswalzen und eine weitere zweite Reihe (8) von Presswalzen bereitgestellt wird, die von einem weiteren gemeinsamen Antriebsmotor (12) angetrieben werden, der in einer oberen Zone (31) des Betriebsmoduls (M2, M9, M10... Mn-1) angeordnet ist und jeweils ein gemeinsames Bewegungsübertragungselement (9) vom Band- oder Kettentyp aufweist, die sich gemäß einem "Zickzack"-Weg abwechselnd zuerst auf einer Walze der weiteren ersten Reihe (7) und anschließend auf einer entsprechenden konjugierten Walze der weiteren zweiten Reihe (8) von Presswalzen wickelt, um die Bewegung von dem weiteren gemeinsamen Antriebsmotor (12) gleichzeitig auf alle Presswalzen der ersten Reihe (7) und zweiten Reihe (8) von Presswalzen zu übertragen, und
- eine Greif- und Öffnungs- und/oder Schließeinheit (13, 14) für die Formeinheit (4), die an einem Pfosten (17) des Bedienmoduls (M3, M8) montiert ist, und entlang des Pfostens (17) verschiebbar in vertikaler Richtung antreibbar ist und eine Vielzahl von Paaren von Entnahmemitteln (10) umfasst, die konfiguriert sind, um auf gegenüberliegenden Seiten mit einem Umfangsvorsprung (19) eines verstärkten Überbaus (50B) der jeweiligen Halbform (5B) oder der Halbform (5B) in Eingriff zu kommen, um ihn zu greifen und von der anderen verbundenen Halbform (5A) wegzubewegen, um den Zugang zur jeweiligen Formeinheit (4) für die Be- und/oder Entladevorgänge zu ermöglichen, wobei die Paare von Drehmitteln (10) antreibbar sind, um die jeweilige Halbform (5B) parallel und gleichzeitig mit der Bewegung der anderen verbundenen Halbform (5A) vorwärts zu bewegen, um die Zugänglichkeit zu einem Bediener und/oder Roboter während der Be- und/oder Entladevorgänge zu erleichtern, und wobei die Öffnungs- und/oder Schließvorrichtung (13, 14) zum Greifen und Drehen der oberen Halbformen (5B) gemäß geneigten Ebenen (PI) konfiguriert ist, um sie in Richtung eines Bedieners und/oder Roboters auszurichten, um deren Arbeitsgänge zum Reinigen und Beladen der jeweiligen Beschichtungselemente (3, 3') zu erleichtern, wobei ferner Ruhe- und Vorschubwalzen (22) für die unteren Halbformen (5A) vorgesehen sind.

27. Betriebsmodul nach Anspruch 26, umfassend eine Ruhe- und Fördereinheit (21) für die oberen Halbformen (5B), die mit Paaren von Drehmitteln (10) versehen ist, die konfiguriert sind, um auf gegenüberliegenden Seiten mit Umfangsvorsprüngen (19) der oberen Halbformen (5B) oder mit verstärkten Überbauten (50B) zum Verstärken der oberen Halbformen (5B) in Eingriff zu kommen, um letztere (5B) vorwärts zu bewegen, wobei die oberen Halbformen (5B) in einer erhöhten Position in Bezug auf die jeweiligen unteren Halbformen (5A) gehalten werden, wobei ferner Ruhe- und Vorschubwalzen (22) für die unteren Halbformen (5A) vorgesehen sind.

## Revendications

1. Procédé de moussage d'objets (2) présentant deux dimensions prévalant sur une troisième dimension et étant munis de deux éléments de revêtement (3, 3') du type coque ou panneau façonné ou du type plaque plate ou thermoformée ou feuille, une couche intermédiaire (6) en matériau de polyuréthane ou de phénol expansé étant interposée entre lesdits deux éléments de revêtement (3, 3'), dans lequel il comprend les étapes consistant à :
i). prévoir une ou plusieurs unités de moulage (4), chacune comprenant un premier demi-moule (5A) et un second demi-moule (5B) aptes à recevoir des éléments de revêtement respectifs (3, 3') pour recouvrir lesdits objets (2) à faire mousser, et destinées à être transportées le long d'un trajet d'avancement fermé (P) dans lequel survient un cycle de moussage ;
ii). agencer à la suite les uns à côté des autres, selon une séquence spatiale souhaitée, une pluralité de modules opérationnels (M, M1,...M11,...Mn) qui sont mutuellement distincts et séparés, munis de dispositifs d'entraînement dédiés qui sont indépendants les uns des autres et mutuellement synchronisables, comprenant des premiers moyens de roulement (7) et des seconds moyens de roulement (8) pour serrer et transporter lesdites unités de moulage (4), lesdits premiers moyens de roulement (7) et lesdits seconds moyens de roulement (8) comprenant respectivement une première série (7) de rouleaux presseurs et une seconde (8) série de rouleaux presseurs qui sont mutuellement parallèles et répartis sur des plans qui sont parallèles les uns aux autres, lesdits modules opérationnels (M, M1,...M11,..,Mn) pouvant être combinés réciproquement de manière à constituer une structure modulaire de longueur et de forme souhaitées définissant ledit trajet d'avancement (P),
iii). régler lesdits premiers moyens de roulement (7) et second moyens de roulement (8) à une distance de fonctionnement réciproque (D) de manière à définir, le long dudit trajet d'avancement (P), un intervalle d'avancement et de serrage (I) pour lesdites unités de moulage (4) ;
iv). insérer, respectivement dans ledit premier demi-moule (5A) et dans ledit second demi-moule (5B), des éléments de revêtement conjugués (3, 3') d'un ou de plusieurs objets respectifs (2),
v). distribuer sur le ou les éléments de revêtement (3) contenus dans un demi-moule (5A) une quantité de mélange de polyuréthane ou de phénol,
vi). amener ledit premier demi-moule (5A) et ledit second demi-moule (5B) dans une position mutuellement opposée de manière à définir une unité de moulage fermée respective (4) dans laquelle le ou les éléments de revêtement (3; 3') contenus dans un demi-moule (5A; 5B) fait/font face et correspond/correspondent aux éléments de revêtement conjugués respectifs (3'; 3) contenus dans l'autre demi-moule (5B; 5A) ;
vii). insérer ladite unité de moulage (4) fermée dans ledit intervalle d'avancement et de serrage (I) et
viii). exercer sur des côtés opposés de ladite unité de moulage fermée (4) des actions de pression opposées (P1; P2) par l'intermédiaire de ladite première série (7) de rouleaux presseurs et de ladite seconde série (8) de rouleaux presseurs, respectivement, de manière à maintenir lesdits premier (5A) et second (5B) demi-moules mutuellement fermés et serrés et de manière à contrer les poussées exercées par la mousse en expansion,
ix). entraîner ladite première série (7) de rouleaux presseurs et ladite seconde série (8) de rouleaux presseurs à avancer en maintenant, dans une configuration fermée et serrée, ladite unité de moulage (4) à l'intérieur dudit intervalle d'avancement et de serrage (I) et le long dudit trajet d'avancement (P) pour achever le cycle de moussage respectif, dans lequel un chauffage desdites unités de moulage (4) est prévu le long d'au moins une partie dudit trajet d'avancement (P), dans lequel la première série (7) et la seconde série (8) de rouleaux presseurs de chaque module opérationnel (M, M1,..., M11,...,Mn) sont entraînés par un élément transmetteur de mouvement (9) unique du type courroie ou chaîne, qui s'enroule selon un trajet en « zigzag » alternativement tout d'abord autour d'un rouleau d'une première série, puis autour d'un rouleau conjugué correspondant de l'autre série de rouleaux presseurs.

2. Procédé selon la revendication 1, dans lequel chaque demi-moule (5A, 5B) est renforcé par couplage avec une superstructure de palette de renforcement et de centrage (50A, 50B) respective, de sorte que chaque unité de moulage (4) est composée d'une superstructure ou palette de renforcement inférieure (50A) à laquelle est couplé un premier demi-moule (5A) et d'une superstructure ou palette de renforcement supérieure (50B) à laquelle est couplé un second demi-moule (5B) respectif, dans lequel lesdites actions de pression opposées (P1, P2) sont générées par le contact forcé de ladite première superstructure de renforcement (50A) ou dudit demi-moule (5A) avec ladite première série (7) de rouleaux presseurs et par le contact forcé de ladite seconde superstructure de renforcement en palette (50B) ou dudit demi-moule (5B) avec ladite seconde série (8) de rouleaux presseurs.

3. Procédé selon la revendication 1 ou 2, dans lequel lesdites première série (7) et seconde série (8) de rouleaux presseurs viennent simultanément en contact avec ladite unité de moulage fermée (4) pour exercer simultanément lesdites actions de pression opposées (P1, P2) sur plusieurs zones de contact réparties uniformément respectivement sur lesdits premier (5A) et second (5B) demi-moules de manière à contrer la pression de la mousse en expansion.

4. Procédé selon l'une quelconque des revendications précédentes, dans lequel, le long dudit chemin d'avancement fermé (P), est prévue, par l'intermédiaire d'un ou plusieurs modules opérationnels (M3, M4, M5, M6, M7, M8) dédiés aux étapes d'ouverture, de déchargement, de chargement, de moussage et de fermeture, l'étape consistant à saisir un demi-moule (5B) par des paires de moyens rotatifs de retrait (10) qui viennent en prise sur des côtés opposés avec une saillie périmétrique (19) dudit demi-moule (5B) ou de la superstructure de renforcement (50B) dudit demi-moule (5B) pour désaccoupler le demi-moule de l'autre demi-moule conjugué (5A) et déplacer le demi-moule vers une position espacée afin de permettre le retrait du ou des objets moulés et le chargement des éléments de revêtement (3, 3') pour faire mousser des objets supplémentaires (2), dans lequel entre les étapes de déchargement des objets moulés et les étapes de chargement de nouveaux éléments de revêtement (3, 3') et de distribution dudit mélange, les deux demi-moules ouverts (5A, 5B) sont avancés le long de trajectoires respectives espacées l'une de l'autre et parallèles pour faciliter une accessibilité à un opérateur ou un robot pendant les opérations de chargement et/ou de déchargement.

5. Procédé selon la revendication 4, dans lequel dans la partie de trajet (P) comprise entre une zone d'ouverture et/ou de déchargement (Z1) et la zone de moussage et/ou de fermeture (Z2) de l'unité de moulage (4), un demi-moule (5A) est avancé sur un plan d'avancement inférieur disposé horizontalement à une première hauteur (Q1), tandis que l'autre demi-moule (5B) est avancé par lesdits moyens de retrait rotatifs (10) jusqu'à une deuxième hauteur (Q2) qui est supérieure à ladite première hauteur (Q1) suivant un plan incliné (PI) orienté vers l'opérateur et/ou le robot.

6. Procédé selon l'une quelconque des revendications précédentes, dans lequel chaque unité de moulage (4), une fois fermée et contenant la mousse en expansion, est immédiatement transférée et insérée dans l'intervalle (I) défini par lesdits rouleaux presseurs (7, 8).

7. Procédé selon la revendication 5, ou 6 lorsque dépendant de la revendication 5, dans lequel chaque unité de moulage (4), une fois fermée et contenant la mousse en expansion, atteint un module opérationnel de levage d'extrémité (M11) qui lève l'unité de moulage (4) jusqu'à une partie de retour (T_{R}) dudit trajet (P) s'étendant horizontalement jusqu'à une troisième hauteur (Q3) qui est supérieure à ladite deuxième hauteur (Q2), et dans lequel ladite unité de moulage (4), à l'extrémité de ladite partie de retour (T_{R}), atteint un module opérationnel d'abaissement d'extrémité (M1) qui ramène ladite unité de moulage (4) à ladite première hauteur (Q1) sur ledit plan d'avancement inférieur horizontal pour envoyer ladite unité de moulage (4) vers de nouvelles étapes d'ouverture et de déchargement, et des étapes ultérieures de chargement, de moussage et de fermeture pour un nouveau cycle de moussage.

8. Procédé selon l'une quelconque des revendications précédentes, dans lequel au moins une partie dudit trajet d'avancement (P) est enfermée à l'intérieur d'une chambre de chauffage (11) contenant de l'air chaud pour chauffer chaque unité de moulage (4) afin de favoriser le processus de moussage.

9. Procédé selon l'une quelconque des revendications précédentes, dans lequel sont prévues, par l'intermédiaire d'un capteur de charge (20), les étapes consistant à détecter la pression exercée sur lesdites unités de moulage par un ou plusieurs rouleaux desdites première (7) et seconde (8) séries de rouleaux presseurs, et à ajuster la force de pression avec laquelle lesdits rouleaux presseurs maintiennent lesdites unités de moulage (4) dans une configuration serrée.

10. Procédé selon l'une quelconque des revendications précédentes, dans lequel chaque module opérationnel (M, M1,..., M11, ..., Mn) est entraîné indépendamment des autres pour déplacer ladite unité de moulage (4) à une vitesse d'avancement différente de zone à zone dudit trajet d'avancement (P) en fonction du temps requis pour les opérations de chargement et/ou de déchargement et du temps nécessaire pour achever la réaction de moussage et la stabilisation de la forme des objets moulés (2).

11. Procédé selon l'une quelconque des revendications précédentes, dans lequel lesdits objets (2) comprennent des portes pour un réfrigérateur et/ou des panneaux pour des cellules de réfrigérateur ou des présentoirs pour des aliments.

12. Procédé selon l'une quelconque des revendications précédentes, dans lequel lesdits objets comprennent des portes pour un réfrigérateur et lesdits éléments de revêtement comprennent une première demi-coque (3) et une seconde demi-coque (3') destinées à définir respectivement un côté intérieur et un côté extérieur de la porte respective, dans lequel au cours de l'étape de chargement précédant le moussage, ladite première demi-coque (3) est insérée dans un demi-moule inférieur respectif (5A) de ladite unité de moulage (4) pour moussage, et ladite seconde demi-coque (3') est insérée dans un demi-moule supérieur (5B) de ladite unité de moulage (4) pour moussage.

13. Procédé selon l'une quelconque des revendications précédentes, dans lequel une ou plusieurs unités de moulage (4) sont remplacées par une ou plusieurs nouvelles unités de moulage sans arrêter le cycle de production, comprenant les étapes suivantes consistant à :
a. préparer une nouvelle unité de moulage sur un module d'ouverture et/ou de fermeture (M_{AC}), tandis que l'unité de moulage à retirer est déviée par le module opérationnel (M1) vers un module (M_{R}) où elle peut être retirée à l'aide d'un chariot élévateur à fourche ou autre système ;
b. augmenter la vitesse d'avancement des unités de moulage (4) qui suivent pour récupérer et remplir la place laissée vacante après le retrait de l'unité de moulage (4) à remplacer ;
c. ralentir ensuite l'avancement d'unités de moulage en file d'attente supplémentaire (4) afin d'obtenir un espace dans lequel insérer la nouvelle unité de moulage attendant temporairement le module d'ouverture et/ou de fermeture (M_{AC}) ;
d. entraîner les modules opérationnels (M_{AC}) et (M_{R}) à faire avancer la nouvelle unité de moulage vers ledit module opérationnel (M1) et insérer ladite nouvelle unité de moulage dans ledit trajet d'avancement (P) le long duquel elle est ouverte, chargée avec les nouvelles demi-coques, reçoit le mélange de polyuréthane distribué et est fermée.

14. Appareil approprié pour un moussage d'objets (2) présentant deux dimensions prévalant sur une troisième dimension et munis chacun de deux éléments de revêtement (3, 3') entre lesquels une couche intermédiaire (6) en matériau de polyuréthane ou de phénol expansé est interposée, comprenant :
- une pluralité de modules opérationnels (M, M1,..., M11,.., Mn) qui sont mutuellement distincts et séparés, chacun étant muni de ses propres moyens de moteur d'entraînement (12) pour être entraîné indépendamment des autres modules opérationnels, et chacun comprenant des premiers moyens de roulement (7) et des seconds moyens de roulement (8) pour serrer et transporter des unités de moulage (4) le long d'un trajet d'avancement (P), dans lequel chaque unité de moulage (4) comprend un premier demi-moule (5A) et un second demi-moule (5B) apte à recevoir des éléments de revêtement respectifs (3, 3') desdits objets (2) à revêtir,
- lesdits modules opérationnels (M, M1,..., M11,.., Mn) pouvant être combinés réciproquement de manière à composer une structure modulaire d'une longueur et d'une forme souhaitées définissant ledit trajet d'avancement (P),
- lesdits premiers moyens de roulement (7) et ledit seconds moyens de roulement (7) comprenant une première série (7) de rouleaux presseurs et une seconde (8) série de rouleaux presseurs qui sont mutuellement parallèles et répartis dans des plans qui sont parallèles les uns aux autres et pouvant être positionnés à une distance de fonctionnement réciproque souhaitée (D) pour définir, le long dudit trajet d'avancement (P), un intervalle (I) pour l'avancement et le serrage de ladite unité de moulage (4), ladite première série (7) de rouleaux presseurs et ladite seconde série (8) de rouleaux presseurs étant configurées pour exercer sur chaque unité de moulage (4), sur des côtés opposés, des actions de pression opposées (P1, P2) de manière à maintenir mutuellement fermés et serrés les premier (5A) et second (5B) demi-moules respectifs et de manière à contrer les poussées exercées par la mousse en expansion ;
- lesdites première série (7) et seconde série (8) de rouleaux presseurs de chaque module opérationnel (M, M1,..., M11,..,Mn) pouvant être entraînées par un élément de transmission de mouvement partagé unique (9) du type courroie ou chaîne, qui s'enroule selon un trajet en « zigzag » alternativement tout d'abord sur un rouleau d'une première série, puis sur un rouleau conjugué correspondant de l'autre série de rouleaux presseurs,
- un groupe d'ouverture et/ou de translation et/ou de fermeture (13, 14, 21) approprié pour ouvrir, et ensuite refermer chaque unité de moulage (4) afin de permettre un retrait des objets en mousse et de permettre un chargement d'autres éléments de revêtement (3, 3') qui sont prêts à recevoir dans un poste de distribution (S_{E}) le mélange de polyuréthane ou de phénol pour un moussage d'autres objets (2),
- une paire de dispositifs de transfert (15) agencés respectivement pour lever chaque unité de moulage (4) jusqu'à une partie de retour supérieure (T_{R}) dudit trajet d'avancement (P), et pour abaisser chaque unité de moulage (4) depuis ladite partie de retour supérieure (T_{R}) de trajet vers une partie de retour inférieure (T_{I}) de trajet le long duquel les unités de moulage (4) sont ouvertes, déchargées, chargées et fermées, et une
- chambre de chauffage (11), délimitée par un carter (41) et renfermant au moins la partie supérieure d'un ou plusieurs desdits modules opérationnels (M, M1, ...., M11,.., Mn), pour chauffer chaque unité de moulage (4) et favoriser le processus de moussage, une partie inférieure dudit carter (41) étant munie d'une partie d'accès ouverte (25) pour des opérateurs et/ou des robots.

15. Dispositif selon la revendication 14, dans lequel lesdites première série (7) de rouleaux presseurs et seconde série (8) de rouleaux presseurs sont réparties pour exercer simultanément des actions de pression opposées (P1, P2) sur plusieurs zones de contact réparties de manière égale par un contact forcé de ladite superstructure de renforcement (50A) ou dudit demi-moule (5A) avec ladite première série (7) de rouleaux presseurs et par le contact forcé de ladite superstructure de renforcement (50B) ou dudit demi-moule (5B) avec ladite seconde série (8) de rouleaux presseurs pour contrer la pression de la mousse en expansion.

16. Dispositif selon l'une quelconque des revendications 14 à 15, dans lequel un ou plusieurs modules opérationnels (M2, M9, M10) sont munis d'une première série (7) et d'une seconde série (8) de rouleaux presseurs situées dans une zone inférieure (30) le long d'une partie avant dudit chemin d'avancement (P), et de première série (7) et seconde série (8) supplémentaires de rouleaux presseurs, situées dans une zone supérieure (31), le long de ladite partie de retour (T_{R}) du trajet d'avancement (P).

17. Appareil selon l'une quelconque des revendications 14 à 16, dans lequel chaque dispositif de transfert (15) est monté sur un module opérationnel (M1; M11,..., Mn) situé à une extrémité respective de l'appareil (1), et comprend une première série (7) et une seconde série (8) de rouleaux presseurs montés sur une unité coulissante (16) qui peut être entraînée de manière coulissante verticalement le long d'un montant (17) du module opérationnel respectif (M1; M11,..., Mn).

18. Appareil selon l'une quelconque des revendications 14 à 17, dans lequel ledit groupe d'ouverture et/ou de translation et/ou de fermeture (13, 14, 21) comprend des paires de moyens rotatifs de retrait (10) configurés pour venir en prise sur des côtés opposés avec une saillie périmétrique (19) obtenue sur une superstructure de renforcement (50B) d'un demi-moule (5B) ou obtenue directement sur ledit demi-moule (5B) pour saisir et retirer le demi-moule (5B) de l'autre demi-moule conjugué (5A) pour rendre l'unité de moulage respective (4) accessible pour les opérations de chargement et/ou de déchargement, lesdites paires de moyens rotatifs (10) pouvant être entraînés pour faire avancer le demi-moule respectif (5B) parallèlement et simultanément à l'avancement de l'autre demi-moule conjugué (5A), pour faciliter l'accessibilité à un opérateur ou à un robot pendant les opérations de déchargement et/ou de chargement, et dans lequel ladite unité d'ouverture et/ou de fermeture (13, 14) est configurée pour saisir et faire tourner les demi-moules supérieurs (5B) selon des plans inclinés (PI) afin d'orienter les demi-moules supérieurs (5B) vers un opérateur et/ou un robot pour en faciliter les opérations de nettoyage et pour faciliter le chargement des éléments de revêtement respectifs (3, 3').

19. Dispositif selon l'une quelconque des revendications 14 à 18, dans lequel ledit groupe d'ouverture et/ou de translation et/ou de fermeture (13, 14, 21) comprend :
a. une unité de saisie et d'ouverture (13), montée sur un module opérationnel d'ouverture (M3), et pouvant être entraînée de manière coulissante dans une direction verticale le long d'un montant (17) dudit module opérationnel d'ouverture (M3) pour saisir et espacer une palette supérieure (50B) ou un demi-moule supérieur (5B) à l'écart de la palette inférieure respective (50A) ou du demi-moule inférieur respectif (5A), dans lequel ledit module opérationnel d'ouverture (M3) comprend des rouleaux (22) définissant un plan de repos et d'avancement pour les palettes inférieures (50A) ou les demi-moules inférieurs (5A),
b. une série d'unités de maintien et de transport (21), prévues sur un ou plusieurs modules opérationnels intermédiaires respectifs (M4, M5, M6, M7), pour faire avancer les palettes (50B) ou les demi-moules supérieurs (5B) maintenant les palettes (50B) ou les demi-moules supérieurs (5B) dans une position levée, lesdits modules opérationnels intermédiaires (M4, M5, M6, M7) comprenant des rouleaux supplémentaires (22) définissant ledit plan de repos et d'avancement pour les palettes supérieures (50B) ou les demi-moules supérieurs (5B),
c. une unité de fermeture (14) montée sur un module opérationnel de fermeture (M8) et pouvant être entraînée de manière coulissante dans une direction verticale le long d'un montant respectif (17) dudit module opérationnel de fermeture (M8) pour ramener chaque demi-moule supérieur (5B) en contact et en correspondance avec le demi-moule conjugué inférieur respectif (5A) reposant sur les rouleaux de repos et d'avancement respectifs (22) dudit module opérationnel de fermeture (M8).

20. Dispositif selon l'une quelconque des revendications 14 à 19, dans lequel un ou plusieurs rouleaux presseurs (7, 8) sont montés sur un support articulé respectif (23) et sont préchargés par des moyens élastiques respectifs (24) qui agissent sur ledit support articulé (23).

21. Dispositif selon l'une quelconque des revendications 14 à 20, dans lequel un ou plusieurs arbres de support desdits rouleaux presseurs (7, 8) sont couplés à des moyens élastiques respectifs (24), du type à lame.

22. Appareil selon la revendication 20 ou 21, comprenant en outre des moyens formant capteur (20) pour détecter et par conséquent permettre l'ajustement de la force avec laquelle un ou plusieurs rouleaux presseurs (7, 8) appuient sur la superstructure de renforcement (50A, 50B) du demi-moule respectif (5A, 5B) ou directement sur le demi-moule (5A, 5B) pour le maintenir fermé et serré contre le demi-moule conjugué respectif (5B, 5A).

23. Dispositif selon l'une quelconque des revendications 14 à 22, comprenant en outre une unité de commande (40) connectée de manière opérationnelle à tous les modules opérationnels (M, M1, ...., M11,.., Mn), et pouvant entraîner chaque module opérationnel indépendamment les uns des autres pour déplacer de manière indexée ou continue lesdites unités de moulage (4), à différentes vitesses d'avancement d'une zone à une autre dudit trajet d'avancement (P) sur la base du temps requis pour les opérations de chargement et/ou de déchargement et du temps requis pour achever la réaction de moussage et stabiliser la forme des objets moulés (2).

24. Dispositif selon l'une quelconque des revendications 14 à 23, comprenant en outre un poste de changement de moule (S_{CS}) apte à remplacer un ou plusieurs moules par d'autres moules différents, pour faire mousser des portes à géométrie variable, ledit poste de changement (S_{CS}) comprenant un module d'ouverture et/ou de fermeture (M_{AC}) pour les unités de moulage (4), et un module auxiliaire (M_{R}) qui inclut un rouleau de support intermédiaire, positionné entre ledit module (M_{AC}) et ledit module (M1).

25. Module opérationnel configuré pour être monté dans ledit appareil (1) selon l'une quelconque des revendications 14 à 24, comprenant :
a. une première série (7) et une seconde série (8) de rouleaux presseurs pour maintenir mutuellement fermés et serrés les premier (5A) et second (5B) demi-moules respectifs et transporter lesdites unités de moulage (4) ;
b. lesdites première série (7) et seconde série (8) de rouleaux presseurs pouvant être positionnées à une distance de fonctionnement réciproque souhaitée (D) afin de définir un intervalle (I) pour l'avancement et le serrage de ladite unité de moulage (4), lesdites première série (7) et seconde série (8) de rouleaux presseurs étant configurés pour exercer sur chaque unité de moulage (4), sur des côtés opposés, des actions de pression opposées (P1, P2) afin de contrer les poussées exercées par la mousse en expansion ;
c. des moyens de moteur d'entraînement (12) pour lesdites première série (7) et seconde série (8) de rouleaux presseurs,
d. un élément de transmission de mouvement partagé (9) du type courroie ou chaîne, qui s'enroule selon un trajet en « zigzag » alternativement sur un rouleau d'une première série et ensuite sur un rouleau conjugué correspondant de l'autre série de rouleaux presseurs pour transmettre le mouvement depuis lesdits moyens de moteur d'entraînement (12) simultanément vers tous les rouleaux presseurs desdites première série (7) et seconde série (8) de rouleaux presseurs,
e. un dispositif de transfert (15) pour transférer lesdites unités de moulage (4) d'une première partie du trajet (P) placée à une première hauteur (Q1) à une seconde partie du trajet (P) placée à une autre hauteur supérieure (Q3), ou inversement, dans lequel ledit dispositif de transfert (15) est défini par une première série (7) et une seconde série (8) de rouleaux presseurs montés sur une unité de coulissement (16) pouvant être entraînée de manière coulissante verticalement le long d'un montant (17) dudit module opérationnel (M1, M11; Mn).

26. Module opérationnel configuré pour être monté dans ledit appareil (1) selon l'une quelconque des revendications 14 à 24, comprenant :
a. une première série (7) et une seconde série (8) de rouleaux presseurs pour serrer et transporter lesdites unités de moulage (4) ;
b. lesdites première série (7) et seconde série (8) de rouleaux presseurs pouvant être positionnées à une distance de fonctionnement réciproque souhaitée (D) afin de définir un intervalle (I) pour l'avancement et le serrage de ladite unité de moulage (4), lesdites première série (7) et seconde série (8) de rouleaux presseurs étant configurées pour exercer sur chaque unité de moulage (4), sur des côtés opposés, des actions de pression opposées (P1, P2) de manière à maintenir mutuellement fermés et serrés les premier (5A) et second (5B) demi-moules respectifs et de manière à contraster les poussées exercées par la mousse en expansion ;
c. des moyens de moteur d'entraînement (12) pour lesdites première série (7) et seconde série (8) de rouleaux presseurs,
d. un élément de transmission de mouvement partagé (9) du type courroie ou chaîne, qui s'enroule selon un trajet en « zigzag » alternativement sur un rouleau d'une première série, puis sur un rouleau conjugué correspondant de l'autre série de rouleaux presseurs afin de transmettre le mouvement depuis lesdits moyens de moteur d'entraînement (12) simultanément à tous les rouleaux presseurs desdites première série (7) et seconde série (8) de rouleaux presseurs, dans lequel ladite première série (7) et ladite seconde série (8) de rouleaux presseurs sont entraînées par un moteur d'entraînement commun (12) et sont placées dans une zone inférieure (30) dudit module opérationnel (M2, M9, M10),
e. une première série supplémentaire (7) de rouleaux presseurs et une seconde série supplémentaire (8) de rouleaux presseurs étant également prévues, entraînées par un moteur d'entraînement commun supplémentaire (12) placé dans une zone supérieure (31) dudit module opérationnel (M2, M9, M10...Mn-1), et présentant un élément de transmission de mouvement partagé respectif (9) du type courroie ou chaîne, qui s'enroule selon un trajet en « zigzag » alternativement tout d'abord sur un rouleau de ladite première série supplémentaire (7) et ensuite sur un rouleau conjugué correspondant de ladite seconde série supplémentaire (8) de rouleaux presseurs afin de transmettre le mouvement dudit moteur d'entraînement commun supplémentaire (12) simultanément à tous les rouleaux presseurs desdites première série (7) et seconde série (8) de rouleaux presseurs, et
- une unité de saisie et d'ouverture et/ou de fermeture (13, 14) pour ladite unité de moulage (4), qui est montée sur un montant (17) dudit module opérationnel (M3, M8) et qui peut être entraînée de manière coulissante dans une direction verticale le long de ledit montant (17) et comprenant une pluralité de paires de moyens rotatifs de retrait (10) configurés pour venir en prise sur des côtés opposés avec une saillie périmétrique (19) d'une superstructure de renforcement (50B) du demi-moule respectif (5B) ou du demi-moule moule (5B) pour le saisir et l'éloigner de l'autre demi-moule connecté (5A) afin de permettre un accès à l'unité de moulage respective (4) pour les opérations de chargement et/ou de déchargement, lesdites paires de moyens de rotation (10) pouvant être entraînées pour faire avancer le demi-moule respectif (5B) parallèlement et simultanément à l'avancement de l'autre demi-moule connecté (5A), afin de faciliter un accessibilité à un opérateur et/ou un robot pendant les opérations de chargement et/ou de déchargement, et dans lequel ledit dispositif d'ouverture et/ou de fermeture (13, 14) est configuré pour saisir et faire tourner les demi-moules supérieurs (5B) selon des plans inclinés (PI) afin de les orienter vers un opérateur et/ou un robot pour en faciliter les opérations de nettoyage et de chargement des éléments de revêtement respectifs (3, 3'), des rouleaux de repos et d'avancement supplémentaires (22) étant également prévus pour les demi-moules inférieurs (5A).

27. Module opérationnel selon la revendication 26, comprenant une unité de repos et de transport (21) pour lesdits demi-moules supérieurs (5B), munie de paires de moyens rotatifs (10) configurés pour venir en prise avec des saillies périmétriques (19) des demi-moules supérieurs (5B) ou avec des superstructures de renforcement (50B) pour renforcer lesdits demi-moules supérieurs (5B), afin de faire avancer ce dernier (5B) en maintenant les demi-moules supérieurs (5B) dans une position levée par rapport aux demi-moules inférieurs respectifs (5A), des rouleaux de repos et d'avancement (22) étant également prévus pour les demi-moules inférieurs (5A).
